(19) Europäisches Patentamt
European Patent Office
Office européen des brevets

(11) EP 4 520 546 B1

(12) EUROPEAN PATENT SPECIFICATION

(45) Date of publication and mention of the grant of the patent:
**23.09.2026 Bulletin 2026/39**

(21) Application number: **24193763.0**

(22) Date of filing: **09.08.2024**

(51) International Patent Classification (IPC):
***B60C 11/00*** *(2006.01)*

(52) Cooperative Patent Classification (CPC):
**B60C 11/0041; B60C 11/005; B60C 11/0083;**
B60C 2011/0025; B60C 2011/0033

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.09.2023 JP 2023145206**

(43) Date of publication of application:
**12.03.2025 Bulletin 2025/11**

(73) Proprietor: **Sumitomo Rubber Industries, Ltd.**
**Kobe-shi, Hyogo 651-0072 (JP)**

(72) Inventors:
- **NAGASE, Masahiro**
  **Kobe-shi, 651-0072 (JP)**
- **KIKUCHI, Hiroshi**
  **Kobe-shi, 651-0072 (JP)**

(74) Representative: **Manitz Finsterwald**
**Patent- und Rechtsanwaltspartnerschaft mbB**
**Ganghoferstraße 29**
**80339 München (DE)**

(56) References cited:
**EP-A1- 4 019 280**
**US-A1- 2022 203 769**
**US-A1- 2022 203 771**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 520 546 B1

## Description

BACKGROUND OF THE INVENTION

Field of the Invention

The present invention relates to a tire. Specifically, the present invention relates to a tire that is mounted to a passenger car.

Background Art

From the viewpoint of consideration for the environment, reduction of rolling resistance is required for tires that are mounted to vehicles. Therefore, for example, decreasing the number of components included in a tire, decreasing the thicknesses of the components, using materials having low energy loss, specifically, rubbers having a low loss tangent (hereinafter, referred to as low-loss rubbers), as the materials forming the components, etc., are considered (for example, Japanese Laid-Open Patent Publication No. 2021-120242). Related technologies are also known from US 2022/203771 A1, US 2022/203769 A1, and EP 4 019 280 A1.

An object of the present invention is to provide a tire that can achieve reduction of rolling resistance without decreasing grip performance on a wet road surface.

SUMMARY OF THE INVENTION

The present invention is set out in the appended claims. A tire according to an aspect of the present invention includes: a pair of beads; a carcass extending on and between the pair of beads; a pair of sidewalls located axially outward of the carcass; a tread located radially outward of the carcass; and a belt located between the carcass and the tread. The tread includes a plurality of layers aligned in a radial direction. The plurality of layers include a cap layer located on an outermost side, a base layer located on an innermost side, and an intermediate layer located between the cap layer and the base layer. A loss tangent at 30°C of the intermediate layer is lower than a loss tangent at 30°C of the cap layer. A loss tangent at 30°C of the base layer is lower than the loss tangent at 30°C of the intermediate layer. An outer surface of the tire includes a tread surface including an equator of the tire, and a pair of side surfaces connected to the tread surface and including a maximum width position of the tire. In a meridian cross-section of the tire, a contour line of the tread surface includes a plurality of arcs aligned in an axial direction. The plurality of arcs include a center arc including the equator, a pair of middle arcs connected to the center arc, a pair of shoulder arcs connected to the middle arcs, and a pair of corner arcs each located on an outermost side and connected to the shoulder arc. A point of intersection of a first tangent line of each corner arc at a first end, on the equator side, of the corner arc and a second tangent line of the corner arc at a second end, on the side surface side, of the corner arc is a tread reference end. A boundary between the shoulder arc and the corner arc is a reference boundary point. A ground-contact end obtained when the tire is fitted onto a standardized rim, an internal pressure of the tire is adjusted to a standardized internal pressure, a load that is 80% of a standardized load is applied as a vertical load to the tire, and the tire is brought into contact with a road surface composed of a flat surface, is a reference ground-contact end, and a position, on the outer surface of the tire, corresponding to the reference ground-contact end is a reference ground-contact position. The reference boundary point is located axially outward of the reference ground-contact position. At least four land portions including two shoulder land portions each located on the outermost side are formed in the tread by at least three circumferential grooves including two shoulder circumferential grooves each located on the outermost side. Each shoulder land portion includes the reference ground-contact position. When, in the meridian cross-section of the tire, a normal line, of an inner surface of the tire, passing through the reference ground-contact position is defined as a ground-contact reference line, the shoulder land portion is divided into an axially inner portion and an axially outer portion by the ground-contact reference line, a ratio of a thickness of the cap layer to a thickness of the tread at the axially outer portion is defined as an outer thickness ratio of the cap layer, a ratio of a thickness of the intermediate layer to the thickness of the tread at the axially outer portion is defined as an outer thickness ratio of the intermediate layer, a ratio of the thickness of the cap layer to the thickness of the tread at the axially inner portion is defined as an inner thickness ratio of the cap layer, and a ratio of the thickness of the intermediate layer to the thickness of the tread at the axially inner portion is defined as an inner thickness ratio of the intermediate layer, the outer thickness ratio of the cap layer is lower than the inner thickness ratio of the cap layer, and the outer thickness ratio of the intermediate layer is higher than the inner thickness ratio of the intermediate layer.

According to the present invention, a tire that can achieve reduction of rolling resistance without decreasing grip performance on a wet road surface is obtained.

BRIEF DESCRIPTION OF THE DRAWINGS

FIG. 1 is a cross-sectional view showing a part of a tire according to one embodiment of the present invention;
FIG. 2 is an enlarged cross-sectional view showing a part of a tread portion;
FIG. 3 is a cross-sectional view illustrating a contour line of a tread surface;
FIG. 4 is a schematic diagram showing a ground-contact surface shape of the tire;
FIG. 5 is a cross-sectional view illustrating a positional relationship between a reference boundary and a reference ground-contact end;
FIG. 6 is an enlarged cross-sectional view showing a middle land portion;
FIG. 7 is an enlarged cross-sectional view showing a shoulder land portion;
FIG. 8 is an enlarged cross-sectional view showing a modification of a tread;
FIG. 9 is an enlarged cross-sectional view showing another modification of the tread;
FIG. 10 is an enlarged cross-sectional view showing a part of a tire of Comparative Example 1;
FIG. 11 is a cross-sectional view illustrating a contour line of a conventional tread surface; and
FIG. 12 is a schematic diagram illustrating deformation of a tread portion due to contact with a road surface.

DETAILED DESCRIPTION

A tire of the present invention is fitted on a rim. The inside of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

The standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a rubber composition is a material obtained by mixing a base rubber and chemicals in a kneading machine such as a Banbury mixer. The base rubber of the rubber composition is not crosslinked. A crosslinked rubber is a molded product obtained by pressurizing and heating the rubber composition. The crosslinked rubber is a crosslinked product of the rubber composition. The base rubber of the crosslinked rubber is crosslinked. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present invention, a loss tangent (tan $\delta$) of a component formed from a crosslinked rubber, of the components included in the tire, is measured using a viscoelasticity spectrometer according to the standards of JIS

K6394. The measurement conditions are as follows.

Initial strain = 10%
Dynamic strain = ±1%
Frequency = 10 Hz
Mode = stretch mode
Temperature = 0°C or 30°C

In this measurement, a test piece (40 mm long × 4 mm wide × 1 mm thick) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the loss tangent is represented as a loss tangent at 0°C or a loss tangent at 30°C.

In the present invention, a LAT abrasion index is an index for evaluating the wear resistance of a component formed from a crosslinked rubber, of the components included in the tire. The higher the LAT abrasion index is, the better the wear resistance of the component to be evaluated is.

The LAT abrasion index is measured using a friction tester, for example, a LAT tester (Laboratory Abrasion and Skid Tester) such as LAT100 (manufactured by VMI) according to the standards of JIS K6264-1 (LAT100 abrasion test). In this measurement, a rubber composition used for forming a component to be measured is vulcanized and molded in a mold for a test piece at 170°C for 20 minutes to prepare the test piece. Using the test piece, a volume loss of the test piece (volume loss of the component to be evaluated) is measured under the conditions of a load of 50 N, a speed of 20 km/h, and a slip angle of 5°. A volume loss (reference volume loss) of a rubber composition serving as a reference is also measured in the same manner. Using the volume loss of the component to be evaluated and the reference volume loss, the LAT abrasion index of the component to be evaluated is obtained by the following equation.

LAT abrasion index = (reference volume loss/volume loss of component to be evaluated) × 100

The LAT abrasion index is a volume loss, of the component to be evaluated, which is represented as an index with the reference volume loss being regarded as 100. The rubber composition serving as a reference is not particularly limited. For example, in the case where the LAT abrasion index of a component of a tread is to be obtained, a rubber composition for a cap layer of a conventional tread composed of two layers that are the cap layer and a base layer is used as a rubber composition serving as a reference.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A portion of the tread portion at an end thereof is also referred to as shoulder portion.

A portion composed of a bead portion and a sidewall portion is also referred to as side portion.

[Findings on Which Present Invention Is Based]

The tread of a tire is usually composed of a cap layer and a base layer aligned in the radial direction. For the cap layer which comes into contact with a road surface, a rubber for which grip performance and wear resistance are taken into consideration is used. The base layer is covered with the cap layer and does not come into contact with a road surface. For the base layer, a low-loss rubber is used from the viewpoint of reducing rolling resistance.

The level of requirement for reducing rolling resistance is high these days, and in order to reduce rolling resistance, it is being considered to replace a part of the cap layer with an intermediate layer that has grip performance inferior to that of the cap layer but has a loss tangent lower than that of the cap layer. However, to meet the level of requirement, it is not enough to simply form a tread with three layers using a cap layer, an intermediate layer, and a base layer, and various approaches have been attempted to further reduce rolling resistance.

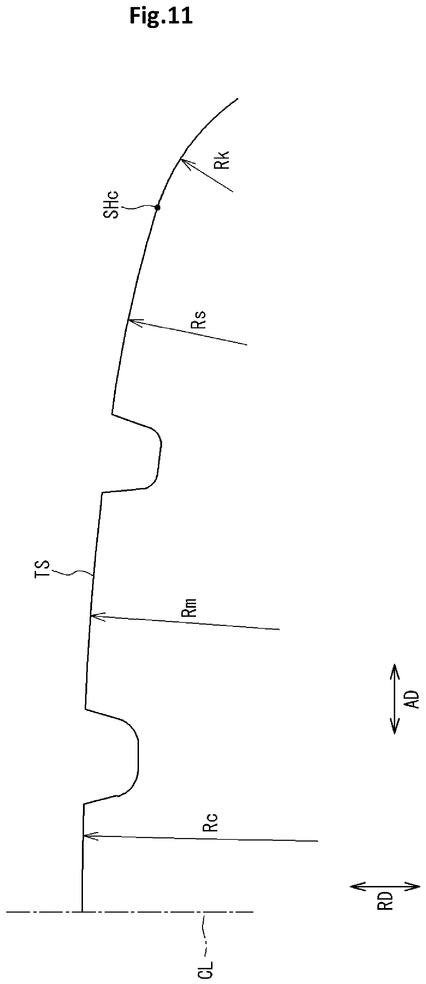

FIG. 11 shows a contour line of a tread surface TS in a meridian cross-section of a conventional tire. The contour line of the tread surface TS is formed by combining a plurality of arcs in an axial direction. The contour line shown in FIG. 11 includes a center arc, a middle arc, a shoulder arc, and a corner arc. The center arc located at the center has a largest radius Rc. The middle arc located next to the center arc has a next largest radius Rm. The shoulder arc located next to the middle arc has a next largest radius Rs. The corner arc located next to the shoulder arc has a smallest radius Rk. The corner arc is an arc located on the outermost side, and a contour line of a side surface is connected to the corner arc.

In the contour line of the tread surface TS, the radius of curvature changes at the boundaries between the adjacent arcs. In the contour line of the tread surface TS, the boundary at which the rate of change of the radius of curvature is the largest is the boundary between the shoulder arc and the corner arc (hereinafter referred to as reference boundary point SHc).

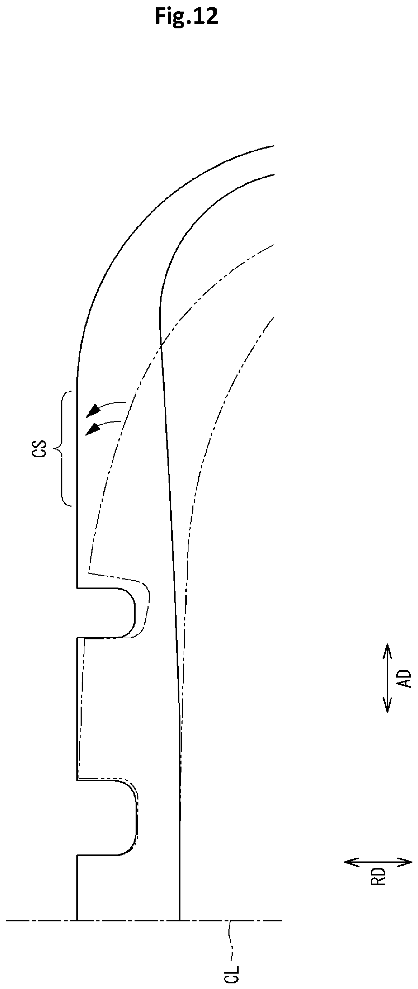

In FIG. 12, a solid line schematically shows the state of a tread portion that is in contact with a road surface. An alternate long and two short dashes line shows the state of the tread portion before (or after) the tread portion comes into contact with a road surface.

As shown in FIG. 12, the tread portion becomes significantly deformed at a shoulder portion thereof when the tread portion comes into contact with the road surface. Accordingly, compressive strain is generated at a surface layer portion, of the shoulder portion, indicated by reference character CS. The compressive strain is a factor that increases rolling resistance. If generation of compressive strain can be suppressed, it is expected that rolling resistance can be reduced further.

The present inventors therefore have conducted a thorough study for the mechanism of generation of compressive strain, have found that generation of compressive strain tends to be promoted when the above-described reference boundary point SHc is included in a ground-contract surface, and thus have completed the invention described below.

[Details of Embodiments of Present Invention]

Hereinafter, the present invention will be described in detail based on preferred embodiments with appropriate reference to the drawings.

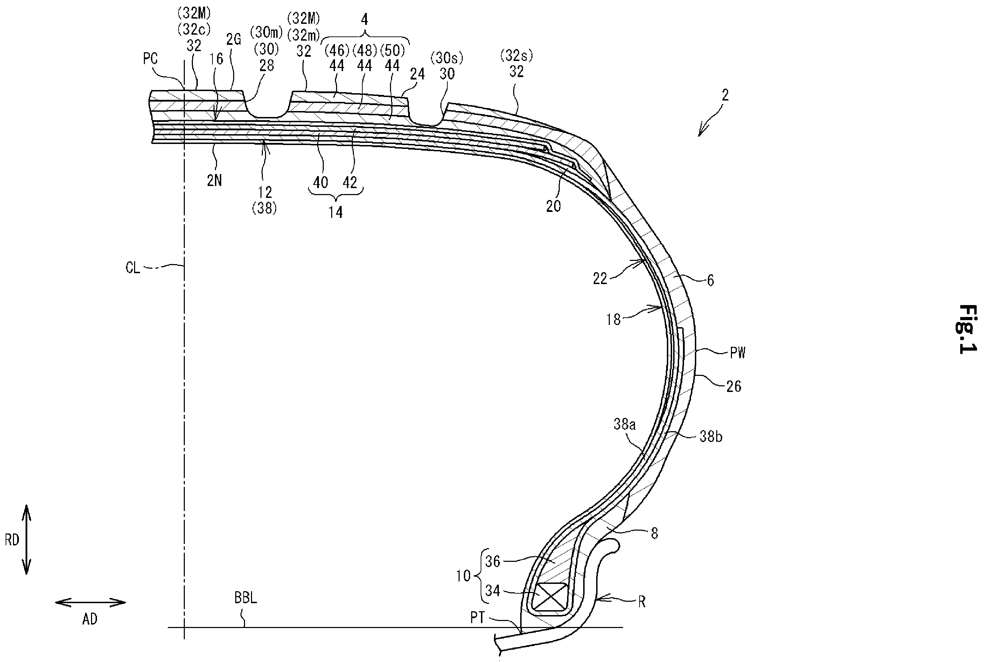

FIG. 1 shows a part of a tire 2 according to one embodiment of the present invention. The tire 2 is a pneumatic tire for a passenger car.

FIG. 1 shows a part of a cross-section of the tire 2 taken along a plane including the rotation axis (not shown) of the tire 2. The cross-section shown in FIG. 1 is also referred to as meridian cross-section. A direction indicated by a double-headed arrow AD is the axial direction of the tire 2. The axial direction of the tire 2 means a direction parallel to the rotation axis of the tire 2. A direction indicated by a double-headed arrow RD is the radial direction of the tire 2. A direction perpendicular to the surface of the drawing sheet of FIG. 1 is the circumferential direction of the tire 2.

In FIG. 1, an alternate long and short dash line CL extending in the radial direction represents the equator plane of the tire 2.

The tire 2 is fitted on a rim R. The interior of the tire 2 is filled, for example, with air to adjust the internal pressure of the tire 2. The rim R is a standardized rim, which is not described in detail.

In FIG. 1, a solid line BBL extending in the axial direction is a bead base line. The bead base line BBL is a line that defines the rim diameter (see JATMA or the like) of the rim R.

In FIG. 1, a position indicated by reference character PC is the point of intersection of an outer surface 2G (specifically, a tread surface described later) of the tire 2 and the equator plane CL. The point of intersection PC is the equator of the tire 2. In the case where a groove is located on the equator plane CL, the equator PC is specified on the basis of a virtual outer surface (virtual tread surface described later) obtained on the assumption that no groove is provided thereon. The equator PC is a radially outer end of the tire 2.

In FIG. 1, a position indicated by reference character PW is an axially outer end (hereinafter, referred to as outer end PW) of the tire 2. In the case where decorations such as patterns and letters are present on the outer surface 2G of the tire 2, the outer end PW is specified on the basis of a virtual outer surface obtained on the assumption that the decorations are not present thereon.

The distance in the axial direction, from a first outer end PW to a second outer end PW, obtained in the standardized state is the maximum width of the tire 2. Each outer end PW is also referred to as maximum width position. The maximum width position is a position at which the tire 2 has the maximum width. The maximum width obtained in the standardized state is the cross-sectional width (see JATMA or the like) of the tire 2.

In FIG. 1, a position indicated by reference character PT is a toe of the tire 2. The toe PT is the boundary between the outer surface 2G and an inner surface 2N of the tire 2.

The tire 2 includes a tread 4, a pair of sidewalls 6, a pair of clinches 8, a pair of beads 10, a carcass 12, a belt 14, a band 16, an inner liner 18, a pair of cushions 20, and a pair of insulations 22 as components thereof.

The tread 4 is located radially outward of the carcass 12. The tread 4 comes into contact with a road surface at a tread surface 24 thereof. The tread 4 has the tread surface 24 which comes into contact with a road surface.

The tread surface 24 is a part of the outer surface 2G of the tire 2. A side surface 26 is connected to the tread surface 24. The outer surface 2G of the tire 2 includes the tread surface 24 and a pair of side surfaces 26.

The tread surface 24 includes the equator PC, and each side surface 26 includes the maximum width position PW.

Grooves 28 are formed on the tread 4. Accordingly, a tread pattern is formed.

The grooves 28 include a circumferential groove 30 continuously extending in the circumferential direction. On the tread 4 of the tire 2, at least three circumferential grooves 30 are formed. Accordingly, at least four land portions 32 are formed.

On the tread 4 shown in FIG. 1, four circumferential grooves 30 are formed so as to be aligned in the axial direction. Among the four circumferential grooves 30, the circumferential groove 30 located on the outermost side is a shoulder circumferential groove 30s. The circumferential groove 30 located axially inward of the shoulder circumferential groove 30s is a middle circumferential groove 30m. On the tread 4, two shoulder circumferential grooves 30s each located on the outermost side and two middle circumferential grooves 30m located between the two shoulder circumferential grooves 30s are formed.

In the tread 4, five land portions 32 are formed by the four circumferential grooves 30. Among the five land portions 32 aligned in the axial direction, the land portion 32 located on the outermost side is a shoulder land portion 32s. The land portion 32 located axially inward of the shoulder land portion 32s is a middle land portion 32m. The land portion 32 located axially inward of the middle land portion 32m is a center land portion 32c. In the tread 4, two shoulder land portions 32s each located on the outermost side, two middle land portions 32m located between the two shoulder land portions 32s, and one center land portion 32c located between the two middle land portions 32m are formed. The center land portion 32c includes the equator PC.

Each sidewall 6 is connected to the tread 4. The sidewall 6 is located radially inward of the tread 4. The sidewall 6 is located axially outward of the carcass 12. The sidewall 6 is formed from a crosslinked rubber for which cut resistance is taken into consideration. The sidewall 6 forms a part of the side surface 26.

Each clinch 8 is located radially inward of the sidewall 6. The clinch 8 comes into contact with the rim R. The clinch 8 is formed from a crosslinked rubber for which wear resistance is taken into consideration.

Each bead 10 is located axially inward of the clinch 8. The bead 10 is located radially inward of the sidewall 6. When one of the pair of beads 10 is a first bead 10, the other bead 10 is a second bead 10.

The bead 10 includes a core 34 and an apex 36. The core 34 extends in the circumferential direction. The core 34 includes a steel wire which is not shown. The apex 36 is located radially outward of the core 34. The apex 36 is formed from a crosslinked rubber that has high stiffness.

The carcass 12 is located inward of the tread 4, the pair of sidewalls 6, and the pair of clinches 8. The carcass 12 extends on and between the pair of beads 10.

The carcass 12 includes at least one carcass ply 38. The carcass 12 of the tire 2 is composed of one carcass ply 38.

The carcass ply 38 includes a large number of carcass cords aligned with each other, which are not shown. These carcass cords intersect the equator plane CL. The carcass 12 of the tire 2 has a radial structure. In the tire 2, a cord formed from an organic fiber is used as each carcass cord. Examples of the organic fiber include nylon fibers, rayon fibers, polyester fibers, and aramid fibers.

The carcass ply 38 includes a ply body 38a and a pair of turned-up portions 38b. The ply body 38a extends between the first bead 10 and the second bead 10. The respective turned-up portions 38b are connected to the ply body 38a and turned up from the inner side toward the outer side in the axial direction at the respective beads 10.

The belt 14 is located radially inward of the tread 4. The belt 14 is stacked on the carcass 12. The belt 14 is located between the carcass 12 and the tread 4. The above-described equator plane CL intersects the belt 14 at the center of the axial width of the belt 14.

The axial width of the belt 14 is not less than 85% and not greater than 100% of the width of the tread 4.

The belt 14 includes an inner layer 40 and an outer layer 42. The inner layer 40 is located radially outward of the ply body 38a and is stacked on the ply body 38a. The outer layer 42 is located radially outward of the inner layer 40 and is stacked on the inner layer 40.

As shown in FIG. 1, an end of the outer layer 42 is located axially inward of an end of the inner layer 40. The outer layer 42 is narrower than the inner layer 40. The length from the end of the outer layer 42 to the end of the inner layer 40 is not less than 3 mm and not greater than 10 mm. The above-described axial width of the belt 14 is represented as the axial width of the wider inner layer 40.

Each of the inner layer 40 and the outer layer 42 includes a large number of belt cords aligned with each other, which are not shown. Each belt cord is tilted relative to the equator plane CL. The material of the belt cord is steel.

The band 16 is stacked on the belt 14 on the inner side of the tread 4. An end of the band 16 is located axially outward of an end of the belt 14. The length from the end of the belt 14 to the end of the band 16 is not less than 3 mm and not greater than 7 mm.

The above-described equator plane CL intersects the band 16 at the center of the axial width of the band 16. Both ends of the band 16 are located so as to be opposed to each other across the equator plane CL. The band 16 is a full band. The band 16 may be composed of a pair of edge bands that are disposed so as to be spaced apart from each other in the axial direction with the equator plane CL therebetween and that are each formed so as to cover a portion of the belt 14 at the end thereof. The band 16 may be composed of a full band and a pair of edge bands.

The band 16 includes a helically wound band cord which is not shown. In the band 16, the band cord extends substantially in the circumferential direction. Specifically, an angle of the band cord with respect to the circumferential direction is not greater than 5°. The band 16 has a jointless structure. A cord formed from an organic fiber is used as the band cord. Examples of the organic fiber include nylon fibers, rayon fibers, polyester fibers, and aramid fibers.

The inner liner 18 is located inward of the carcass 12. The inner liner 18 forms the inner surface 2N of the tire 2. The inner liner 18 is formed from a crosslinked rubber that has an excellent air blocking property. The inner liner 18 maintains the internal pressure of the tire 2.

The respective cushions 20 are located so as to be spaced apart from each other in the axial direction. Each cushion 20 is located between the ends of the belt 14 and the band 16 and the carcass 12. The cushion 20 is formed from a crosslinked rubber that has low stiffness. In the tire 2, the cushions 20 are not essential components. Depending on the specifications of the tire 2, the cushions 20 may not necessarily be provided.

Each insulation 22 is located between the carcass 12 and the inner liner 18. A first end of the insulation 22 is located axially inward of the end of the belt 14. A second end of the insulation 22 is located between the maximum width position PW and the bead 10 in the radial direction.

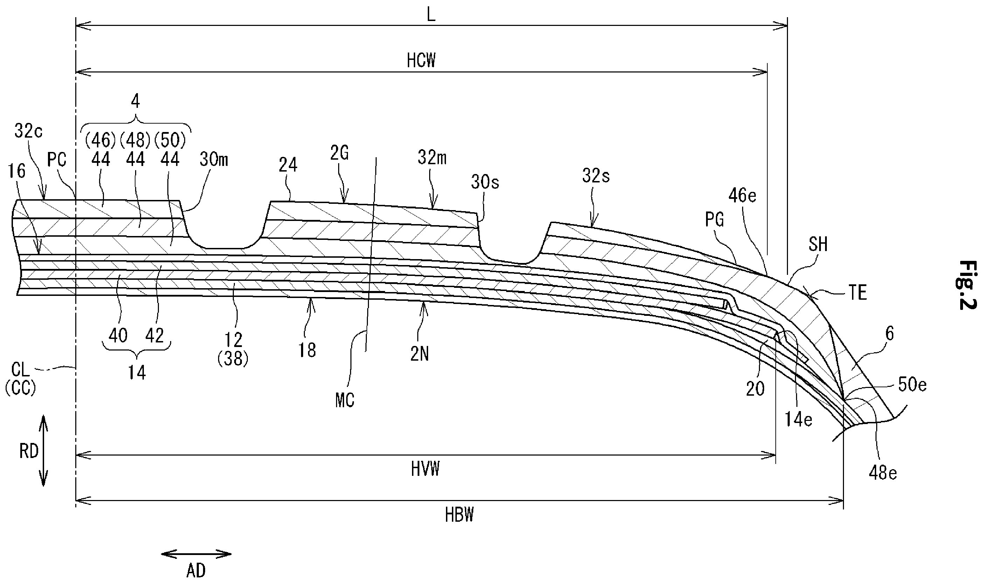

FIG. 2 shows a part of a tread portion of the tire 2 shown in FIG. 1.

The tread 4 of the tire 2 includes a plurality of layers 44 aligned in the radial direction. Each layer 44 is formed from a crosslinked rubber.

The plurality of layers 44 include a cap layer 46, an intermediate layer 48, and a base layer 50. The cap layer 46 is located on the outermost side. The base layer 50 is located on the innermost side. The intermediate layer 48 is located between the cap layer 46 and the base layer 50. The tread 4 of the tire 2 includes the cap layer 46 located on the outermost side, the base layer 50 located on the innermost side, and the intermediate layer 48 located between the cap layer 46 and the base layer 50. The tread 4 has a three-layer structure.

The cap layer 46 comes into contact with a road surface. An end 46e of the cap layer 46 is located axially inward of an end 48e of the intermediate layer 48. Most of the intermediate layer 48 is covered with the cap layer 46. When the cap layer 46 is worn away, the intermediate layer 48 comes into contact with a road surface. Contact with a road surface is taken into consideration for the intermediate layer 48. The position of an end 50e of the base layer 50 coincides with the position of the end 48e of the intermediate layer 48 in the axial direction, or the end 50e of the base layer 50 is located axially inward of the end 48e of the intermediate layer 48. The entirety of the base layer 50 is covered with the intermediate layer 48. The base layer 50 does not come into contact with a road surface. Contact with a road surface is not taken into consideration for the base layer 50.

In the tire 2, a loss tangent LTm at 30°C of the intermediate layer 48 is lower than a loss tangent LTc at 30°C of the cap layer 46. A loss tangent LTb at 30°C of the base layer 50 is lower than the loss tangent LTm at 30°C of the intermediate layer 48. The cap layer 46, the base layer 50, and the intermediate layer 48 are formed from crosslinked rubbers having different heat generation properties, respectively. The cap layer 46 is most likely to generate heat, and the base layer 50 is least likely to generate heat. The intermediate layer 48 has heat generation properties between that of the cap layer 46 and that of the base layer 50.

The cap layer 46 having the high loss tangent LTc provides a high grip force. The cap layer 46 can contribute to improvement of wet performance. The base layer 50 having the low loss tangent LTb is less likely to generate heat. The base layer 50 can contribute to reduction of rolling resistance. The intermediate layer 48 has the intermediate loss tangent LTm between the loss tangent LTc and the loss tangent LTb. In the case where importance is placed on wet performance, the loss tangent LTm of the intermediate layer 48 is set to a loss tangent close to the loss tangent LTc of the cap layer 46. In the case where importance is placed on rolling resistance, the loss tangent LTm of the intermediate layer 48 is set to a loss tangent close to the loss tangent LTb of the base layer 50.

As described above, the five land portions 32, which include the center land portion 32c, a pair of the middle land portions 32m, and a pair of the shoulder land portions 32s, are formed in the tread 4 of the tire 2. Each land portion 32 includes the cap layer 46, the intermediate layer 48, and the base layer 50.

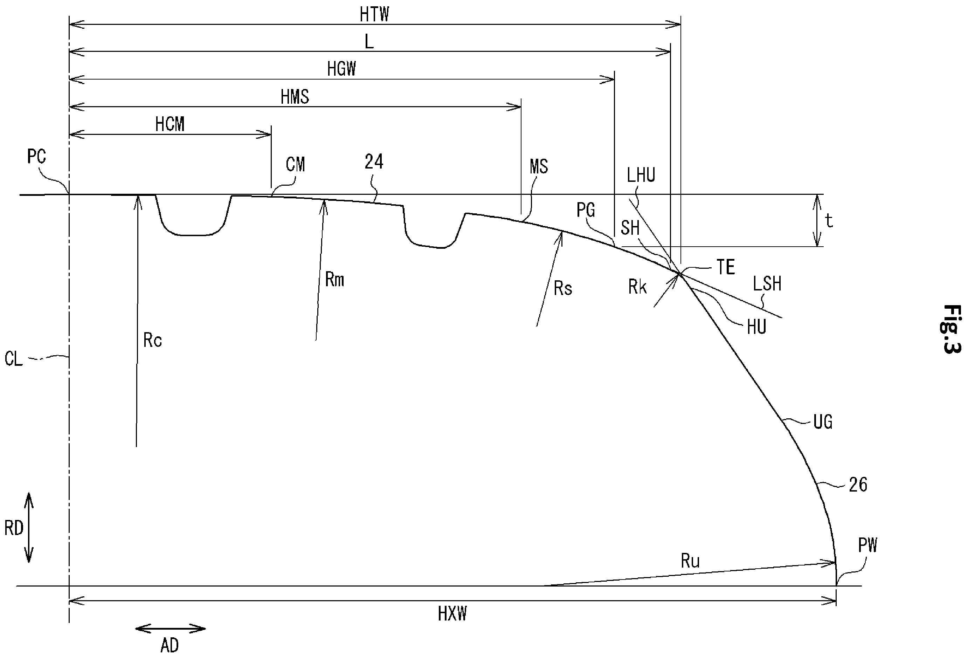

FIG. 3 shows a part of a contour line of the outer surface 2G of the tire 2 in the meridian cross-section. The contour line of the outer surface 2G is represented by a virtual outer surface obtained on the assumption that no decorations such as patterns and letters are present thereon. Although not described in detail, in the present invention, the contour line of the outer surface 2G is obtained by measuring the outer surface shape of the tire 2 in the standardized state, for example, using a displacement sensor.

A contour line of the tread surface 24 in the meridian cross-section includes a plurality of arcs aligned in the axial direction. Specifically, the contour line of the tread surface 24 is composed of a plurality of arcs aligned in the axial direction.

The plurality of arcs include a center arc, a pair of middle arcs, a pair of shoulder arcs, and a pair of corner arcs.

The center arc is the arc located at the center in the axial direction among the plurality of arcs. In FIG. 3, an arrow indicated by reference character Rc represents the radius of the center arc. The center arc includes the equator PC. Although not shown, the center of the center arc is located on the equator plane CL. The center arc has the largest radius Rc among the plurality of arcs included in the contour line of the tread surface 24.

Each middle arc is the arc located axially outward of the center arc. In FIG. 3, an arrow indicated by reference character Rm represents the radius of the middle arc. The middle arc has the next largest radius Rm after the radius Rc of the center arc.

Each shoulder arc is the arc located axially outward of the middle arc. In FIG. 3, an arrow indicated by reference character Rs represents the radius of the shoulder arc. The shoulder arc has the next largest radius Rs after the radius Rm of the middle arc.

Each corner arc is the arc located axially outward of the shoulder arc. In FIG. 3, an arrow indicated by reference character Rk represents the radius of the corner arc. The corner arc has the next largest radius Rk after the radius Rs of the shoulder arc. The corner arc is the arc located on the outermost side among the plurality of arcs aligned in the axial direction. The corner arc has the smallest radius Rk among the plurality of arcs included in the contour line of the tread surface 24.

A first end, on the equator side, of the middle arc is connected to the center arc. In FIG. 3, a position indicated by reference character CM is the boundary between the center arc and the middle arc. The middle arc is tangent to the center arc at the boundary CM. The boundary CM is an end of the center arc and is also the first end of the middle arc.

A first end, on the equator side, of the shoulder arc is connected to a second end, on the side surface side, of the middle arc. In FIG. 3, a position indicated by reference character MS is the boundary between the middle arc and the shoulder arc. The shoulder arc is tangent to the middle arc at the boundary MS. The boundary MS is the second end of the middle arc and is also the first end of the shoulder arc.

A first end, on the equator side, of the corner arc is connected to a second end, on the side surface side, of the shoulder arc. In FIG. 3, a position indicated by reference character SH is the boundary between the shoulder arc and the corner arc. The corner arc is tangent to the shoulder arc at the boundary SH. The boundary SH is the second end of the shoulder arc and is also the first end of the corner arc.

The contour line of the tread surface 24 of the tire 2 is composed of seven arcs that include the center arc, the pair of middle arcs, the pair of shoulder arcs, and the pair of corner arcs.

In the present invention, among arcs that have a center on the equator plane CL and that include the equator PC, an arc that has the largest overlap length with the contour line of the tread surface 24 may be specified as the center arc, an end of this arc may be specified as the boundary CM, and the radius of this arc may be used as the radius Rc of the center arc. Among arcs that have a center on a straight line passing through the boundary CM and the center of the center arc and that include the boundary CM, an arc that has the largest overlap length with the contour line of the tread surface 24 may be specified as the middle arc, the outer end of this arc may be specified as the boundary MS, and the radius of this arc may be used as the radius Rm of the middle arc. Among arcs that have a center on a straight line passing through the boundary MS and the center of the middle arc and that include the boundary MS, an arc that has the largest overlap length with the contour line of the tread surface 24 may be specified as the shoulder arc, the outer end of this arc may be specified as the boundary SH, and the radius of this arc may be used as the radius Rs of the shoulder arc. Among arcs that have a center on a straight line passing through the boundary SH and the center of the shoulder arc and that include the boundary SH, an arc that has the largest overlap length with the contour line of the tread surface 24 may be specified as the corner arc, the outer end of this arc may be specified as a boundary HU described later, and the radius of this arc may be used as the radius Rk of the corner arc.

In the tire 2, a contour line of each side surface 26 is connected to the second end of the corner arc. In FIG. 3, a position indicated by reference character HU is the boundary between the corner arc and the contour line of the side surface 26. The contour line of the side surface 26 is tangent to the corner arc at the boundary HU. The boundary HU is the second end of the corner arc and is also a first end of the contour line of the side surface 26. A second end of the contour line of the side surface 26 is the toe PT of the tire 2.

In FIG. 3, a straight line indicated by reference character LSH is a first tangent line that is tangent to the corner arc at the first end SH of the corner arc. A straight line indicated by reference character LHU is a second tangent line that is tangent to the corner arc at the second end HU of the corner arc. A position indicated by reference character TE is the point of intersection of the first tangent line LSH and the second tangent line LHU. In the present invention, the point of intersection TE is a tread reference end.

In FIG. 3, a length indicated by a double-headed arrow HTW is the distance in the axial direction from the equator PC to the tread reference end TE. In the present invention, the distance HTW in the axial direction is a reference width of the tread 4. Twice the reference width HTW is the above-described width of the tread 4. A length indicated by a double-headed arrow HXW is the distance in the axial direction from the equator PC to the maximum width position PW. In the present invention, the distance HXW in the axial direction is a reference cross-sectional width. Twice the reference cross-sectional width HXW is the above-described cross-sectional width of the tire 2.

In the tire 2, the ratio (HTW/HXW) of the reference width HTW of the tread 4 to the reference cross-sectional width HXW is not less than 70% and not greater than 80%.

In FIG. 3, a length indicated by a double-headed arrow HCM is the distance in the axial direction from the equator PC to the boundary CM. A length indicated by a double-headed arrow HMS is the distance in the axial direction from the

equator PC to the boundary MS.

In the tire 2, the ratio (HCM/HTW) of the distance HCM in the axial direction to the reference width HTW of the tread 4 is preferably not less than 0.25 and not greater than 0.35. The ratio (HMS/HTW) of the distance HMS in the axial direction to the reference width HTW of the tread 4 is preferably not less than 0.65 and not greater than 0.75.

The contour line of the side surface 26 includes at least one arc. The contour line of the side surface 26 includes an upper arc. The upper arc is an arc that includes the maximum width position PW and that extends from the maximum width position PW toward the tread reference end TE side. The upper arc is an arc that is convex outward, and the center thereof is located on a straight line that passes through the maximum width position PW and that extends in the axial direction. In FIG. 3, a position indicated by reference character UG is an outer end of the upper arc. In FIG. 3, an arrow indicated by reference character Ru represents the radius of the upper arc.

In the tire 2, the above-described boundary HU and the outer end UG are connected by a straight line. The straight line is tangent to the corner arc at the boundary HU and is tangent to the upper arc at the outer end UG. The position of the boundary HU and the position of the outer end UG may coincide with each other. In this case, the upper arc is directly connected to the corner arc.

The farther the outer end UG of the upper arc is located from the boundary HU, the more the volume of the rubber at a shoulder portion can be reduced. The reduction of the rubber volume contributes to reduction of rolling resistance. From this viewpoint, in the contour line of the outer surface 2G, the boundary HU and the outer end UG are preferably connected by a straight line.

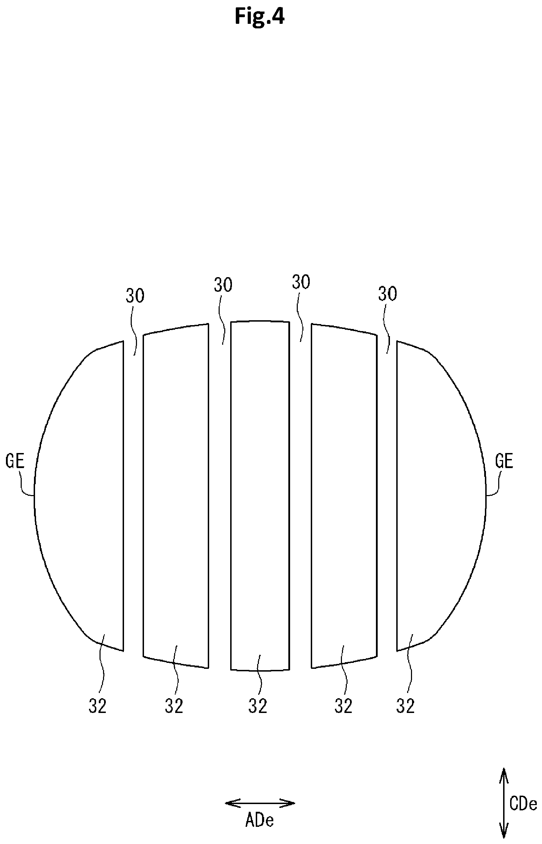

FIG. 4 schematically shows a ground-contact surface shape of the tire 2. In FIG. 4, a direction indicated by a double-headed arrow ADe corresponds to the axial direction of the tire 2. A direction indicated by a double-headed arrow CDe corresponds to the circumferential direction of the tire 2.

A ground-contact surface is obtained, using a tire ground-contact surface shape measuring device (not shown), by applying a predetermined load to the tire 2 in the standardized state and bringing the tire 2 into contact with a flat surface. The ground-contact surface shape shown in FIG. 4 is obtained by tracing the contour of each land portion 32 included in the ground-contact surface. To obtain the ground-contact surface, the tire 2 is placed such that the axial direction thereof is parallel to a road surface. The above-described load is applied to the tire 2 in a direction perpendicular to the road surface. In other words, a vertical load is applied to the tire 2 in a state where the camber angle of the tire 2 is set to 0°.

In FIG. 4, each position indicated by reference character GE is an axially outer end (also referred to as ground-contact end) of the ground-contact surface. In the present invention, each axially outer end GE of a ground-contact surface of the tire 2 obtained by applying a vertical load that is 80% of the standardized load, to the tire 2 in the standardized state, and bringing the tire 2 into contact with a road surface composed of a flat surface, is a reference ground-contact end. The position, on the outer surface 2G of the tire 2, corresponding to the reference ground-contact end GE is a reference ground-contact position. In FIGS. 2 and 3, a position indicated by reference character PG is the reference ground-contact position. The reference ground-contact position PG is included in the shoulder land portion 32s.

In FIG. 3, a length indicated by a double-headed arrow HGW is the distance in the axial direction from the equator PC to the reference ground-contact position PG. In the tire 2, the ratio of the distance HGW in the axial direction to the reference width HTW of the tread 4 is set in the range of not less than 0.88 and not greater than 0.92.

In the tire 2, the plurality of arcs included in the contour line of the tread surface 24 have different radii. The radius of curvature of the contour line of the tread surface 24 changes at the boundaries between the adjacent arcs.

As described above, each corner arc is the arc located on the outermost side in the axial direction among the plurality of arcs included in the contour line of the tread surface 24, and has the smallest radius Rk. The contour line of the side surface 26 is connected to the corner arc. The radius of curvature of the contour line of the tread surface 24 has the highest rate of change at the boundary SH between the shoulder arc and the corner arc. In the present invention, the boundary SH between the shoulder arc and the corner arc is a reference boundary point. In FIG. 3, a length indicated by a double-headed arrow L is the distance in the axial direction from the equator PC to the reference boundary point SH.

The contour line of a tread surface is closely related to the state of contact between a tread and a road surface. Therefore, the present inventors have conducted a thorough study for the relationship between the contour line of the tread surface and generation of compressive strain. As a result, the present inventors have found that the position of the reference boundary point with respect to the reference ground-contact position is involved in generation of compressive strain, specifically, generation of compressive strain at a surface layer portion of a shoulder portion tends to be promoted if the reference boundary point is located axially inward of the reference ground-contact position, and thus have completed the present invention.

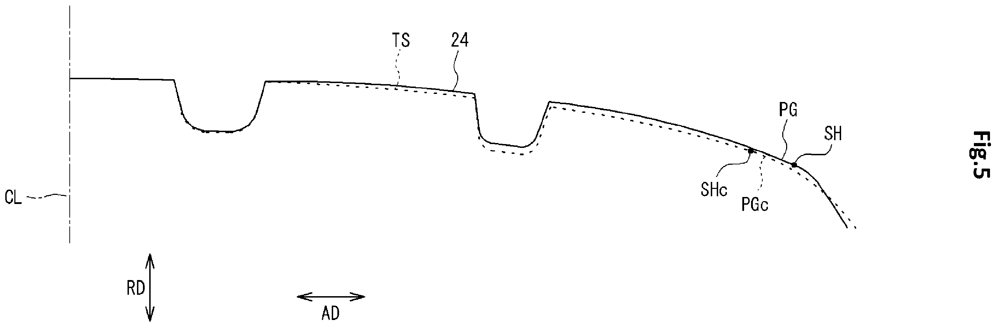

FIG. 5 shows the positional relationship between the reference boundary point SH and the reference ground-contact position PG. In FIG. 5, a solid line is the contour line of the tread surface 24, and a dotted line is the contour line of a conventional tread surface TS. In the contour line of the conventional tread surface TS, a position indicated by reference character SHc is a reference boundary point in the conventional tread surface TS. A position indicated by reference character PGc is a reference ground-contact position in the conventional tread surface TS.

As shown in FIG. 5, in the conventional tread surface TS, the reference boundary point SHc is located axially

inward of the reference ground-contact position PGc. On the other hand, in the tread surface 24 of the tire 2, the reference boundary point SH is located axially outward of the reference ground-contact position PG. In the tread surface 24, the reference boundary point SH at which the change in curvature of the contour line is large is not included in the ground-contact surface. In the tire 2, generation of compressive strain at the surface layer portion of the shoulder portion, which is confirmed in the conventional tire, is suppressed. The reference boundary point SH being located axially outward of the reference ground-contact position PG can contribute to reduction of the rolling resistance of the tire 2.

In the tire 2, the thickness of each layer included in the tread 4 is represented as a length along a normal line of the inner surface 2N of the tire 2 in the meridian cross-section of the tire 2. This normal line is also referred to as thickness reference line.

The ratio (TC/TA) of the thickness of the cap layer 46 (hereinafter referred to as cap layer thickness TC) to the thickness of the tread 4 (hereinafter referred to as tread thickness TA) is a thickness ratio RC of the cap layer 46. If the cap layer 46 is not included in the tread 4 at the thickness measurement location, the thickness ratio RC is 0 (zero) percent.

The ratio (TM/TA) of the thickness of the intermediate layer 48 (hereinafter referred to as intermediate layer thickness TM) to the thickness of the tread 4 (hereinafter referred to as tread thickness TA) is a thickness ratio RM of the intermediate layer 48. If the tread 4 at the thickness measurement location is composed of only the intermediate layer 48, the thickness ratio RM is 100%.

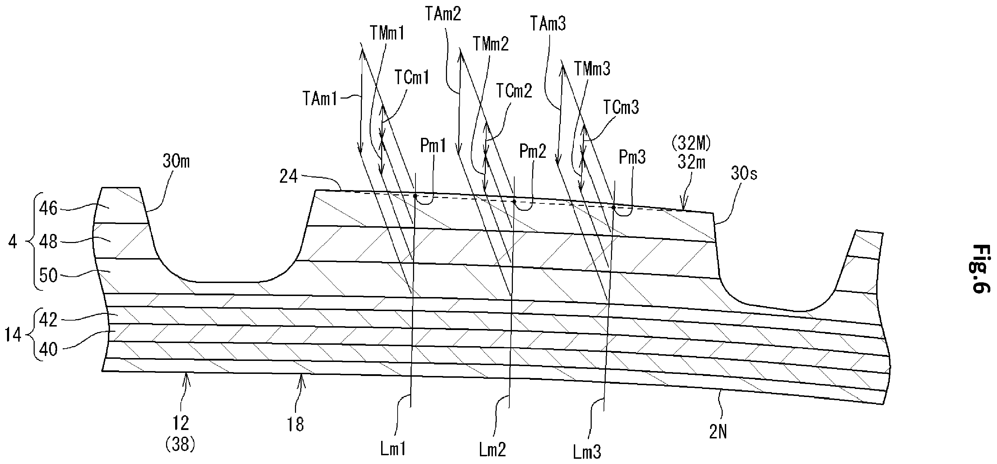

FIG. 6 shows a part of the tread portion shown in FIG. 2. FIG. 6 shows a cross-section of the middle land portion 32m. The middle land portion 32m is the land portion 32 located between two circumferential grooves 30 (hereinafter also referred to as main land portion 32M). The thickness of each layer in the main land portion 32M will be described using the middle land portion 32m as an example.

In FIG. 6, straight lines Lm1, Lm2, and Lm3 are thickness reference lines at the main land portion 32M. Reference characters Pm1, Pm2, and Pm3 indicate positions that divide a line segment connecting one edge and another edge of the main land portion 32M into four equal parts. The thickness reference line Lm1 passes through the position Pm1, the thickness reference line Lm2 passes through the position Pm2, and the thickness reference line Lm3 passes through the position Pm3.

A length indicated by a double-headed arrow TAm1 is the tread thickness at the position Pm1. A length indicated by a double-headed arrow TCm1 is the cap layer thickness at the position Pm1. A length indicated by a double-headed arrow TMm1 is the intermediate layer thickness at the position Pm1.

The ratio (TCm1/TAm1) of the cap layer thickness TCm1 to the tread thickness TAm1 is a thickness ratio RCm1 of the cap layer 46 at the position Pm1.

The ratio (TMm1/TAm1) of the intermediate layer thickness TMm1 to the tread thickness TAm1 is a thickness ratio RMm1 of the intermediate layer 48 at the position Pm1.

A length indicated by a double-headed arrow TAm2 is the tread thickness at the position Pm2. A length indicated by a double-headed arrow TCm2 is the cap layer thickness at the position Pm2. A length indicated by a double-headed arrow TMm2 is the intermediate layer thickness at the position Pm2.

The ratio (TCm2/TAm2) of the cap layer thickness TCm2 to the tread thickness TAm2 is a thickness ratio RCm2 of the cap layer 46 at the position Pm2.

The ratio (TMm2/TAm2) of the intermediate layer thickness TMm2 to the tread thickness TAm2 is a thickness ratio RMm2 of the intermediate layer 48 at the position Pm2.

A length indicated by a double-headed arrow TAm3 is the tread thickness at the position Pm3. A length indicated by a double-headed arrow TCm3 is the cap layer thickness at the position Pm3. A length indicated by a double-headed arrow TMm3 is the intermediate layer thickness at the position Pm3.

The ratio (TCm3/TAm3) of the cap layer thickness TCm3 to the tread thickness TAm3 is a thickness ratio RCm3 of the cap layer 46 at the position Pm3.

The ratio (TMm3/TAm3) of the intermediate layer thickness TMm3 to the tread thickness TAm3 is a thickness ratio RMm3 of the intermediate layer 48 at the position Pm3.

In the tire 2, a ratio RCm of the thickness of the cap layer 46 to the thickness of the tread 4 at the main land portion 32M is represented by the average of the cap layer thickness ratio RCm1, the cap layer thickness ratio RCm2, and the cap layer thickness ratio RCm3. The ratio RCm is a thickness ratio RCm of the cap layer 46 at the main land portion 32M.

As shown in FIG. 1, the cap layer 46 has a uniform thickness at the main land portion 32M. Specifically, the absolute value of the difference (RCm - RCm1) between the cap layer thickness ratio RCm at the main land portion 32M and the cap layer thickness ratio RCm1 at the position Pm1 is not greater than 3%, the absolute value of the difference (RCm - RCm2) between the thickness ratio RCm and the thickness ratio RCm2 is not greater than 3%, and the absolute value of the difference (RCm - RCm3) between the thickness ratio RCm and the thickness ratio RCm3 is not greater than 3%.

The cap layer thickness ratio RCm at the main land portion 32M is not less than 20% and not greater than 30%.

In the tire 2, a ratio RMm of the thickness of the intermediate layer 48 to the thickness of the tread 4 at the main land portion 32M is represented by the average of the intermediate layer thickness ratio RMm1, the intermediate layer thickness

ratio RMm2, and the intermediate layer thickness ratio RMm3. The ratio RMm is the thickness ratio of the intermediate layer 48 at the main land portion 32M.

As shown in FIG. 1, the intermediate layer 48 has a uniform thickness at the main land portion 32M. Specifically, the absolute value of the difference (RMm - RMm1) between the intermediate layer thickness ratio RMm at the middle land portion 32m and the intermediate layer thickness ratio RMm1 at the position Pm1 is not greater than 3%, the absolute value of the difference (RMm - RMm2) between the thickness ratio RMm and the thickness ratio RMm2 is not greater than 3%, and the absolute value of the difference (RMm - RMm3) between the thickness ratio RMm and the thickness ratio RMm3 is not greater than 3%.

The intermediate layer thickness ratio RMm at the middle land portion 32m is not less than 40% and not greater than 50%.

The center land portion 32c is a main land portion 32, as is the middle land portion 32m. Although not described in detail, the thickness of each layer in the center land portion 32c is also represented in the same manner as for the middle land portion 32m. The cap layer 46 and the intermediate layer 48 at the center land portion 32c each have a uniform thickness.

In the tire 2, the cap layer 46 and the intermediate layer 48 at the land portion 32 located between two circumferential grooves 30, that is, at the main land portion 32, each have a uniform thickness.

The thickness ratio RC of the cap layer 46 at the main land portion 32 is not less than 20% and not greater than 30%. The thickness ratio RM of the intermediate layer 48 at the main land portion 32 is not less than 40% and not greater than 50%.

In contrast, the thickness of the cap layer 46 (or the thickness of the intermediate layer 48) at the shoulder land portion 32s is not uniform in the axial direction. The thickness of the cap layer 46 (or the thickness of the intermediate layer 48) varies in the axial direction.

As described above, each shoulder land portion 32s of the tire 2 includes the reference ground-contact position PG. The frequency with which a portion of the shoulder land portion 32s on the axially outer side of the reference ground-contact position PG comes into contact with a road surface is less than the frequency with which a portion of the shoulder land portion 32s on the axially inner side of the reference ground-contact position PG comes into contact with a road surface. As described above, the reference boundary point SH is located axially outward of the reference ground-contact position PG. The reference boundary point SH is included in the outer portion of the shoulder land portion 32s which comes into contact with a road surface with less frequency.

In the tire 2, the cap layer thickness TC and the intermediate layer thickness TM at the shoulder land portion 32s are controlled in consideration of these points.

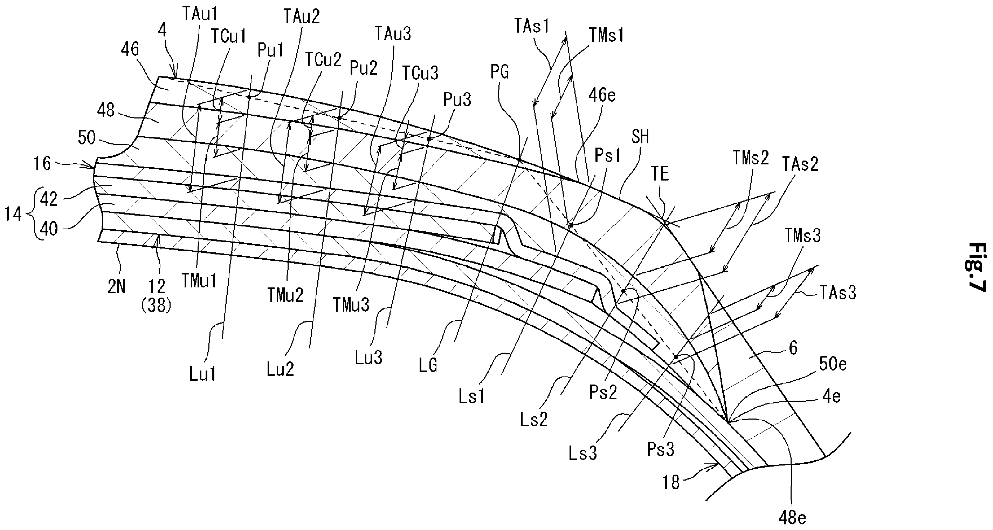

FIG. 7 shows a cross-section of the shoulder land portion 32s. The cross-section of the shoulder land portion 32s shown in FIG. 7 is a part of the cross-section of the tread portion shown in FIG. 2.

In FIG. 7, a straight line LG is a ground-contact reference line. The ground-contact reference line LG is a normal line, of the inner surface 2N of the tire 2, passing through the reference ground-contact position PG.

A portion on the equator plane side from the ground-contact reference line LG is an axially inner portion of the shoulder land portion 32s. A portion on the sidewall side from the ground-contact reference line LG is an axially outer portion of the shoulder land portion 32s. The ground-contact reference line LG divides the shoulder land portion 32s into the axially inner portion and the axially outer portion.

In FIG. 7, straight lines Lu1, Lu2, and Lu3 are thickness reference lines at the axially inner portion of the shoulder land portion 32s. Reference characters Pu1, Pu2, and Pu3 indicate positions that divide a line segment connecting the edge on the equator side of the shoulder land portion 32s and the reference ground-contact position PG into four equal parts. The thickness reference line Lu1 passes through the position Pu1, the thickness reference line Lu2 passes through the position Pu2, and the thickness reference line Lu3 passes through the position Pu3.

A length indicated by a double-headed arrow TAu1 is the tread thickness at the position Pu1. A length indicated by a double-headed arrow TCu1 is the cap layer thickness at the position Pu1. A length indicated by a double-headed arrow TMu1 is the intermediate layer thickness at the position Pu1.

The ratio (TCu1/TAu1) of the cap layer thickness TCu1 to the tread thickness TAu1 is a thickness ratio RCu1 of the cap layer 46 at the position Pu1.

The ratio (TMu1/TAu1) of the intermediate layer thickness TMu1 to the tread thickness TAu1 is a thickness ratio RMu1 of the intermediate layer 48 at the position Pu1.

A length indicated by a double-headed arrow TAu2 is the tread thickness at the position Pu2. A length indicated by a double-headed arrow TCu2 is the cap layer thickness at the position Pu2. A length indicated by a double-headed arrow TMu2 is the intermediate layer thickness at the position Pu2.

The ratio (TCu2/TAu2) of the cap layer thickness TCu2 to the tread thickness TAu2 is a thickness ratio RCu2 of the cap layer 46 at the position Pu2.

The ratio (TMu2/TAu2) of the intermediate layer thickness TMu2 to the tread thickness TAu2 is a thickness ratio RMu2 of the intermediate layer 48 at the position Pu2.

A length indicated by a double-headed arrow TAu3 is the tread thickness at the position Pu3. A length indicated by a double-headed arrow TCu3 is the cap layer thickness at the position Pu3. A length indicated by a double-headed arrow TMu3 is the intermediate layer thickness at the position Pu3.

The ratio (TCu3/TAu3) of the cap layer thickness TCu3 to the tread thickness TAu3 is a thickness ratio RCu3 of the cap layer 46 at the position Pu3.

The ratio (TMu3/TAu3) of the intermediate layer thickness TMu3 to the tread thickness TAu3 is a thickness ratio RMu3 of the intermediate layer 48 at the position Pu3.

In the tire 2, a ratio RCu of the thickness of the cap layer 46 to the thickness of the tread 4 at the axially inner portion of the shoulder land portion 32s is represented by the average of the cap layer thickness ratio RCu1, the cap layer thickness ratio RCu2, and the cap layer thickness ratio RCu3. The ratio RCu is an inner thickness ratio RCu of the cap layer 46 at the axially inner portion of the shoulder land portion 32s.

A ratio RMu of the thickness of the intermediate layer 48 to the thickness of the tread 4 at the axially inner portion of the shoulder land portion 32s is represented by the average of the intermediate layer thickness ratio RMu1, the intermediate layer thickness ratio RMu2, and the intermediate layer thickness ratio RMu3. The ratio RMu is an inner thickness ratio RMu of the intermediate layer 48 at the axially inner portion of the shoulder land portion 32s.

In FIG. 7, straight lines Ls1, Ls2, and Ls3 are thickness reference lines at the axially outer portion of the shoulder land portion 32s. Reference characters Ps1, Ps2, and Ps3 indicate positions that divide a line segment connecting the reference ground-contact position PG and an end 4e of the tread 4 into four equal parts. The thickness reference line Ls1 passes through the position Ps1, the thickness reference line Ls2 passes through the position Ps2, and the thickness reference line Ls3 passes through the position Ps3.

A length indicated by a double-headed arrow TAs1 is the tread thickness at the position Ps1. At the shoulder land portion 32s shown in FIG. 7, the cap layer 46 is not included in the tread 4 at the position Ps1. However, if the tread 4 at the position Ps1 includes the cap layer 46, the cap layer thickness at the position Ps1 is represented as a thickness TCs1. A length indicated by a double-headed arrow TMs1 is the intermediate layer thickness at the position Ps1.

The ratio (TCs1/TAs1) of the cap layer thickness TCs1 to the tread thickness TAs1 is a thickness ratio RCs1 of the cap layer 46 at the position Ps1.

The ratio (TMs1/TAs1) of the intermediate layer thickness TMs1 to the tread thickness TAs1 is a thickness ratio RMs1 of the intermediate layer 48 at the position Ps1.

As described above, at the shoulder land portion 32s shown in FIG. 7, the cap layer 46 is not included in the tread 4 at the position Ps1. Therefore, at the shoulder land portion 32s shown in FIG. 7, the cap layer thickness ratio RCs1 at the position Ps1 is 0 (zero) percent.

A length indicated by a double-headed arrow TAs2 is the tread thickness at the position Ps2. At the shoulder land portion 32s shown in FIG. 7, the cap layer 46 is not included in the tread 4 at the position Ps2. However, if the tread 4 at the position Ps2 includes the cap layer 46, the cap layer thickness at the position Ps2 is represented as a thickness TCs2. A length indicated by a double-headed arrow TMs2 is the intermediate layer thickness at the position Ps2.

The ratio (TCs2/TAs2) of the cap layer thickness TCs2 to the tread thickness TAs2 is a thickness ratio RCs2 of the cap layer 46 at the position Ps2.

The ratio (TMs2/TAs2) of the intermediate layer thickness TMs2 to the tread thickness TAs2 is a thickness ratio RMs2 of the intermediate layer 48 at the position Ps2.

As described above, at the shoulder land portion 32s shown in FIG. 7, the cap layer 46 is not included in the tread 4 at the position Ps2. Therefore, at the shoulder land portion 32s shown in FIG. 7, the cap layer thickness ratio RCs2 at the position Ps2 is 0 (zero) percent.

A length indicated by a double-headed arrow TAs3 is the tread thickness at the position Ps3. At the shoulder land portion 32s shown in FIG. 7, the cap layer 46 is not included in the tread 4 at the position Ps3. However, if the tread 4 at the position Ps3 includes the cap layer 46, the cap layer thickness at the position Ps3 is represented as a thickness TCs3. A length indicated by a double-headed arrow TMs3 is the intermediate layer thickness at the position Ps3.

The ratio (TCs3/TAs3) of the cap layer thickness TCs3 to the tread thickness TAs3 is a thickness ratio RCs3 of the cap layer 46 at the position Ps3.

The ratio (TMs3/TAs3) of the intermediate layer thickness TMs3 to the tread thickness TAs3 is a thickness ratio RMs3 of the intermediate layer 48 at the position Ps3.

As described above, at the shoulder land portion 32s shown in FIG. 7, the cap layer 46 is not included in the tread 4 at the position Ps3. Therefore, at the shoulder land portion 32s shown in FIG. 7, the cap layer thickness ratio RCs3 at the position Ps3 is 0 (zero) percent.

In the tire 2, a ratio RCs of the thickness of the cap layer 46 to the thickness of the tread 4 at the axially outer portion of the shoulder land portion 32s is represented by the average of the cap layer thickness ratio RCs1, the cap layer thickness ratio RCs2, and the cap layer thickness ratio RCs3. The ratio RCs is an outer thickness ratio RCs of the cap layer 46 at the axially outer portion of the shoulder land portion 32s.

A ratio RMs of the thickness of the intermediate layer 48 to the thickness of the tread 4 at the axially outer portion of

the shoulder land portion 32s is represented by the average of the intermediate layer thickness ratio RMs1, the intermediate layer thickness ratio RMs2, and the intermediate layer thickness ratio RMs3. The ratio RMs is an outer thickness ratio RMs of the intermediate layer 48 at the axially outer portion of the shoulder land portion 32s.

As described above, at the shoulder land portion 32s shown in FIG. 7, the cap layer thickness ratio RCs1, the cap layer thickness ratio RCs2, and the cap layer thickness ratio RCs3 are 0%. The outer thickness ratio RCs of the cap layer 46 at the axially outer portion of the shoulder land portion 32s is 0%.

At the shoulder land portion 32s of the tire 2, the outer thickness ratio RCs of the cap layer 46 is lower than the inner thickness ratio RCu of the cap layer 46. In contrast, the outer thickness ratio RMs of the intermediate layer 48 is higher than the inner thickness ratio RMu of the intermediate layer 48.

At the portion on the axially outer side of the reference ground-contact position PG, the thickness ratio of the cap layer 46 is lower and the thickness ratio of the intermediate layer 48 is higher than at the portion on the axially inner side of the reference ground-contact position PG.

In the tire 2, the intermediate layer 48 included in the shoulder land portion 32s can effectively contribute to reduction of rolling resistance. Since generation of compressive strain at the surface layer portion of the shoulder portion is suppressed when the reference boundary point SH is located axially outward of the reference ground-contact position PG, the intermediate layer 48 included in the shoulder land portion 32s can more effectively contribute to reduction of rolling resistance.

Since the frequency with which the portion of the tread surface 24 on the axially outer side of the reference ground-contact position PG comes into contact with a road surface is low, even if the shoulder land portion 32s is formed such that the outer thickness ratio RCs of the cap layer 46 at the axially outer portion of the shoulder land portion 32s is lower than the inner thickness ratio RCu of the cap layer 46 at the axially inner portion of the shoulder land portion 32s, the influence on grip performance on a wet road surface (wet grip performance) is small. In the tire 2, a decrease in wet grip performance is suppressed. Even if the portion on the axially outer side of the reference ground-contact position PG comes into contact with a road surface, the intermediate layer 48 can contribute to exhibiting grip performance.

The tire 2 can achieve reduction of rolling resistance without decreasing wet grip performance.

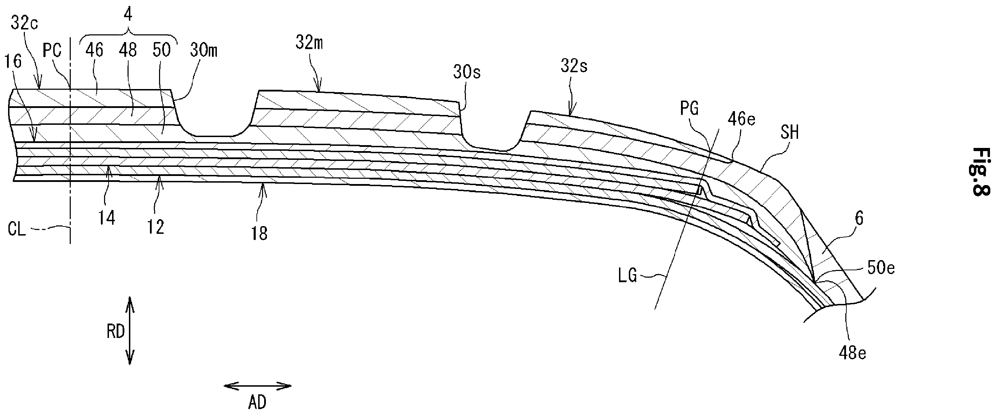

As shown in FIG. 2, the cross-sectional shape of the cap layer 46 at the shoulder land portion 32s is tapered outward in the axial direction. The cross-sectional shape of the cap layer 46 may be shaped such that a portion at the end 46e of the cap layer 46 has a thickness as shown in FIG. 8. In this case, the effect of the cap layer 46 is continuously exhibited even when the tread 4 is worn. The tire 2 can suppress a decrease in grip performance on a wet road surface due to wear while reducing rolling resistance.

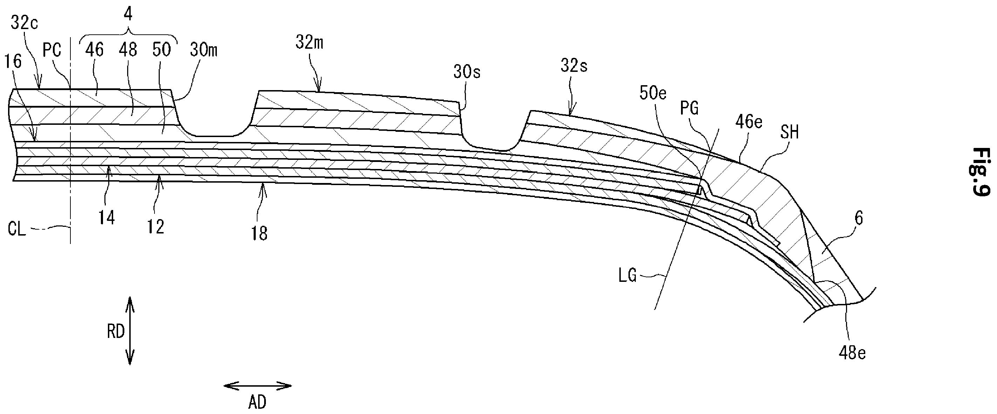

As shown in FIG. 9, the end 50e of the base layer 50 may be located axially inward of an end 14e of the belt 14. In this case, exposure of the base layer 50 at an end portion of the tread 4 can be effectively suppressed. Damage due to exposure of the base layer 50 is prevented. When the end 50e of the base layer 50 is located axially inward of the end 14e of the belt 14, the volume of the base layer 50 is reduced. However, since generation of compressive strain at the surface layer portion of the shoulder portion is suppressed when the reference boundary point SH is located axially outward of the reference ground-contact position PG, even if the volume of the base layer 50 is reduced, the tire 2 can reduce rolling resistance. The tire 2 can achieve reduction of rolling resistance, without decreasing grip performance on a wet road surface, while improving durability.

As described above, the outer thickness ratio RCs of the cap layer 46 at the axially outer portion of the shoulder land portion 32s is lower than the inner thickness ratio RCu of the cap layer 46 at the axially inner portion of the shoulder land portion 32s. Specifically, the ratio (RCs/RCu) of the outer thickness ratio RCs of the cap layer 46 to the inner thickness ratio RCu of the cap layer 46 is preferably not greater than 0.9. Accordingly, the tire 2 can effectively reduce rolling resistance. The ratio (RCs/RCu) is particularly preferably 0 (zero).

As described above, the outer thickness ratio RMs of the intermediate layer 48 at the axially outer portion of the shoulder land portion 32s is higher than the inner thickness ratio RMu of the intermediate layer 48 at the axially inner portion of the shoulder land portion 32s. Specifically, the ratio (RMs/RMu) of the outer thickness ratio RMs of the intermediate layer 48 to the inner thickness ratio RMu of the intermediate layer 48 is preferably not less than 1.1 and not greater than 2.0.

When the ratio (RMs/RMu) is set to be not less than 1.1, the intermediate layer 48 can effectively contribute to reduction of rolling resistance.

When the ratio (RMs/RMu) is set to be not greater than 2.0, the cap layer 46 can contribute to exhibiting grip performance on a wet road surface (hereinafter referred to as wet grip performance).

In the tire 2, the inner thickness ratio RCu of the cap layer 46 at the axially inner portion of the shoulder land portion 32s is preferably not less than 20% and not greater than 30%.

When the inner thickness ratio RCu of the cap layer 46 is set to be not less than 20%, the tire 2 can maintain good wet grip performance.

When the inner thickness ratio RCu of the cap layer 46 is set to be not greater than 30%, the tire 2 can effectively reduce rolling resistance.

In the tire 2, the inner thickness ratio RMu of the intermediate layer 48 at the axially inner portion of the shoulder

land portion 32s is preferably not less than 40% and not greater than 50%.

When the inner thickness ratio RMu of the intermediate layer 48 is set to be not greater than 50%, the tire 2 can maintain good wet grip performance.

When the inner thickness ratio RMu of the intermediate layer 48 is set to be not less than 40%, the tire 2 can effectively reduce rolling resistance.

In FIG. 2, a length indicated by a double-headed arrow HCW is the distance in the axial direction from the equator PC to the end 46e of the cap layer 46. A length indicated by a double-headed arrow HBW is the distance in the axial direction from the equator PC to the end 50e of the base layer 50. A length indicated by a double-headed arrow HVW is the distance in the axial direction from the equator PC to the end 14e of the belt 14. Twice the distance HVW is the above-described axial width of the belt 14.

In the tire 2, the ratio (HCW/L) of the distance HCW in the axial direction from the equator PC to the end 46e of the cap layer 46 to the distance L in the axial direction from the equator PC to the reference boundary point SH is not less than 0.9 and not greater than 1.0.

When the ratio (HCW/L) is set to be not less than 0.9, the cap layer 46 can effectively contribute to improvement of wet grip performance. From this viewpoint, the ratio (HCW/L) is more preferably not less than 0.93.

When the ratio (HCW/L) is set to be not greater than 1.0, an intermediate layer 48 having a sufficient volume is formed. This intermediate layer 48 can effectively contribute to reduction of rolling resistance. From this viewpoint, the ratio (HCW/L) is more preferably not greater than 0.97.

In the tire 2, the ratio (HBW/HVW) of the distance HBW in the axial direction from the equator PC to the end 50e of the base layer 50 to the distance HVW in the axial direction from the equator PC to the end 14e of the belt 14 is preferably not less than 0.8 and not greater than 1.2.

When the ratio (HBW/HVW) is set to be not less than 0.8, the base layer 50 can contribute to reduction of rolling resistance. From this viewpoint, the ratio (HBW/HVW) is more preferably not less than 0.9.

When the ratio (HBW/HVW) is set to be not greater than 1.2, exposure of the base layer 50 is effectively suppressed. The tire 2 can reduce rolling resistance, without decreasing grip performance on a wet road surface, while improving durability. From this viewpoint, the ratio (HBW/HVW) is more preferably not greater than 1.1.

As described above, in the tire 2, the loss tangent LTm at 30°C of the intermediate layer 48 is lower than the loss tangent LTc at 30°C of the cap layer 46. Specifically, the ratio (LTm/LTc) of the loss tangent LTm at 30°C of the intermediate layer 48 to the loss tangent LTc at 30°C of the cap layer 46 is preferably not less than 40% and not greater than 90%.

When the ratio (LTm/LTc) is set to be not less than 40%, the intermediate layer 48 can ensure the required stiffness, and can effectively contribute to improvement of wet performance. From this viewpoint, the ratio (LTm/LTc) is more preferably not less than 50% and further preferably not less than 60%.

When the ratio (LTm/LTc) is set to be not greater than 90%, the intermediate layer 48 can effectively contribute to reduction of rolling resistance. From this viewpoint, the ratio (LTm/LTc) is more preferably not greater than 80% and further preferably not greater than 70%.

The loss tangent LTc at 30°C of the cap layer 46 is preferably not less than 0.15. This is because the cap layer 46 can contribute to improvement of wet performance. From this viewpoint, the loss tangent LTc is more preferably not less than 0.16 and further preferably not less than 0.17. The cap layer 46 comes into contact with a road surface. From the viewpoint of improvement of wet performance, it is more preferable if the loss tangent LTc is higher. However, a higher loss tangent LTc leads to heat generation. There is a concern that the heated cap layer 46 may raise the temperature of the intermediate layer 48 more than expected. From the viewpoint of being able to stably keep the temperature of the entirety of the tread 4 and maintain low rolling resistance, the loss tangent LTc at 30°C of the cap layer 46 is preferably not greater than 0.30, more preferably not greater than 0.28, and further preferably not greater than 0.27.

From the viewpoint that the cap layer 46 can effectively contribute to improvement of wet grip performance, a loss tangent LTcw at 0°C of the cap layer 46 is preferably not less than 0.80.

In the tire 2, from the viewpoint that the intermediate layer 48 effectively contributes to reduction of rolling resistance, the loss tangent LTm at 30°C of the intermediate layer 48 is preferably not greater than 0.15, more preferably not greater than 0.14, and further preferably not greater than 0.13. From the viewpoint that the intermediate layer 48 can ensure the required stiffness and can effectively contribute to improvement of wet performance, the loss tangent LTm at 30°C of the intermediate layer 48 is preferably not less than 0.10 and more preferably not less than 0.11.

As described above, in the tire 2, the loss tangent LTb at 30°C of the base layer 50 is lower than the loss tangent LTm at 30°C of the intermediate layer 48. Specifically, the loss tangent LTb at 30°C of the base layer 50 is preferably not greater than 0.10. This is because the base layer 50 effectively contributes to reduction of rolling resistance. From this viewpoint, the loss tangent LTb is more preferably not greater than 0.09. It is more preferable if the loss tangent LTb of the base layer 50 is lower, so that a preferable lower limit is not set.

In the tire 2, the cap layer 46 and the intermediate layer 48 coexist at each land portion 32. If there is a difference between the wear resistance of the cap layer 46 and the wear resistance of the intermediate layer 48, there is a concern that a difference may be produced in the amount of wear between the cap layer 46 and the intermediate layer 48. In this case, a

step may be formed near the boundary between the cap layer 46 and the intermediate layer 48, which may impair the appearance of the tire 2. From the viewpoint of maintaining good appearance, it is preferable that a LAT abrasion index LATc of the cap layer 46 is substantially equal to a LAT abrasion index LATm of the intermediate layer 48. Specifically, the difference (LATc - LATm) between the LAT abrasion index LATc of the cap layer 46 and the LAT abrasion index LATm of the intermediate layer 48 is preferably not less than -10 and not greater than 10. The difference (LATc - LATm) is more preferably not less than -5 and not greater than 5. The difference (LATc - LATm) is further preferably 0.

From the viewpoint of exhibiting good wear resistance, the LAT abrasion index LATc of the cap layer 46 is preferably not less than 130. From the same viewpoint, the LAT abrasion index LATm of the intermediate layer 48 is preferably not less than 130.

As described above, in the tire 2, the reference boundary point SH is located axially outward of the reference ground-contact position PG. However, if the reference boundary point SH is located axially outward away from the reference ground-contact position PG, there is a concern that the thickness of the tread 4 at the shoulder portion may increase. The increase in the thickness of the tread 4 increases rolling resistance. Thus, in this case, the rolling resistance reduction effect brought about by suppressing generation of compressive strain is canceled out.

Therefore, in the tire 2, preferably, the reference boundary point SH with respect to the reference ground-contact position PG is precisely controlled. Specifically, the ratio (L/HTW) of the distance L in the axial direction from the equator PC to the reference boundary point SH to the distance HTW in the axial direction from the equator PC to the tread reference end TE is preferably not less than 0.94 and not greater than 0.99.

When the ratio (L/HTW) is set to be not greater than 0.99, the reference boundary point SH is located without being excessively far from the reference ground-contact position PG. The interval between the reference boundary point SH and the reference ground-contact position PG is appropriately maintained, so that the tread 4 at the shoulder portion is formed with an appropriate thickness. In the tire 2, an increase in rolling resistance due to an increase in thickness can be suppressed. In the tire 2, the rolling resistance reduction effect brought about by suppressing generation of compressive strain is sufficiently exhibited. From this viewpoint, the ratio (L/HTW) is more preferably not greater than 0.97.

When the ratio (L/HTW) is set to be not less than 0.94, the fact that the reference boundary point SH is located axially outward of the reference ground-contact position PG can effectively contribute to suppressing generation of compressive strain. In the tire 2, rolling resistance caused by compressive strain is reduced. From this viewpoint, the ratio (L/HTW) is more preferably not less than 0.95.

As shown in FIG. 2, the end 48e of the intermediate layer 48 is located axially outward of the reference boundary point SH. From the viewpoint that the intermediate layer 48 can effectively contribute to reducing rolling resistance without decreasing grip performance on a wet road surface, it is more preferable that the end 48e of the intermediate layer 48 is located axially outward of the reference boundary point SH, and the ratio (L/HTW) of the distance L in the axial direction from the equator PC to the reference boundary point SH to the distance HTW in the axial direction from the equator PC to the tread reference end TE is not less than 0.94 and not greater than 0.99.

In FIG. 3, a length indicated by a double-headed arrow t is the distance in the radial direction from the equator PC to the reference ground-contact position PG.

In the tire 2, the ratio (t/HTW) of the distance t in the radial direction from the equator PC to the reference ground-contact position PG to the distance HTW in the axial direction from the equator PC to the tread reference end TE is preferably not less than 0.06 and not greater than 0.15.

When the ratio (t/HTW) is set to be not less than 0.06, the tread surface 24 does not become excessively flat, and the tread 4 at the shoulder portion can be formed with an appropriate thickness in the tire 2. A local increase in ground-contact pressure is suppressed, so that occurrence of uneven wear is suppressed. In the tire 2, good uneven wear resistance is maintained. From this viewpoint, the ratio (t/HTW) is more preferably not less than 0.10.

When the ratio (t/HTW) is set to be not greater than 0.15, generation of compressive strain is effectively suppressed. The tire 2 can achieve further reduction of rolling resistance. From this viewpoint, the ratio (t/HTW) is more preferably not greater than 0.12.

From the viewpoint of being able to reduce rolling resistance without decreasing grip performance on a wet road surface, it is more preferable that the ratio (L/HTW) of the distance L in the axial direction from the equator PC to the reference boundary point SH to the distance HTW in the axial direction from the equator PC to the tread reference end TE is not less than 0.94 and not greater than 0.99, and the ratio (t/HTW) of the distance t in the radial direction from the equator PC to the reference ground-contact position PG to the distance HTW in the axial direction from the equator PC to the tread reference end TE is not less than 0.06 and not greater than 0.15.

In the tire 2, the ratio (Rm/Rs) of the radius Rm of the middle arc to the radius Rs of the shoulder arc is preferably not less than 2.1 and not greater than 2.7.

When the ratio (Rm/Rs) is set to be not less than 2.1, generation of compressive strain is effectively suppressed. The tire 2 can achieve further reduction of rolling resistance. From this viewpoint, the ratio (Rm/Rs) is more preferably not less than 2.3.

When the ratio (Rm/Rs) is set to be not greater than 2.7, slip of the tread surface 24 against a road surface is

suppressed, and the tread 4 at the shoulder portion is formed with an appropriate thickness. In the tire 2, good uneven wear resistance is maintained. From this viewpoint, the ratio (Rm/Rs) is more preferably not greater than 2.5.

In the tire 2, the ratio (Rc/Rm) of the radius Rc of the center arc to the radius Rm of the middle arc is preferably not less than 4.0 and not greater than 5.5.

When the ratio (Rc/Rm) is set to be not less than 4.0, generation of compressive strain is effectively suppressed. The tire 2 can achieve further reduction of rolling resistance. From this viewpoint, the ratio (Rc/Rm) is more preferably not less than 4.2.

When the ratio (Rc/Rm) is set to be not greater than 5.5, slip of the tread surface 24 against a road surface is suppressed, and the tread 4 at the shoulder portion is formed with an appropriate thickness. In the tire 2, good uneven wear resistance is maintained. From this viewpoint, the ratio (Rm/Rs) is more preferably not greater than 5.3.

In the tire 2, the ratio (Rs/Rk) of the radius Rs of the shoulder arc to the radius Rk of the corner arc is preferably not less than 10 and not greater than 20.

When the ratio (Rs/Rk) is set to be not less than 10, generation of compressive strain is effectively suppressed. The tire 2 can achieve further reduction of rolling resistance. From this viewpoint, the ratio (Rs/Rk) is more preferably not less than 13.

When the ratio (Rs/Rk) is set to be not greater than 20, slip of the tread surface 24 against a road surface is suppressed, and the tread 4 at the shoulder portion is formed with an appropriate thickness. In the tire 2, good uneven wear resistance is maintained. From this viewpoint, the ratio (Rs/Rk) is more preferably not greater than 17.

As is obvious from the above description, according to the present invention, a tire that can achieve reduction of rolling resistance without decreasing grip performance on a wet road surface is obtained.

EXAMPLES

Hereinafter, the present invention will be described in further detail by means of examples, etc., but the present invention is not limited to these examples.

[Example 1]

A pneumatic tire for a passenger car (tire size = 205/55R19) having the basic structure shown in FIG. 2 was obtained.

By adjusting the contour line of the tread surface, the ratio (L/HTW), the ratio (t/HTW), and the ratio (Rm/Rs) were set as shown in Table 1 below.

The ratio (HGW/HTW) of the distance HGW in the axial direction from the equator to the reference ground-contact position PG to the reference width HTW of the tread was 0.88. The reference boundary point SH was located axially outward of the reference ground-contact position PG.

The loss tangent LTcw at 0°C of the cap layer was 0.80. The LAT abrasion index LATc of the cap layer was 130.

The ratio (RMs/RMu) of the outer thickness ratio RMs of the intermediate layer to the inner thickness ratio RMu of the intermediate layer at the shoulder land portion was 1.2. The ratio (RCs/RCu) of the outer thickness ratio RCs of the cap layer to the inner thickness ratio RCu of the cap layer was 0 (zero).

[Comparative Example 1]

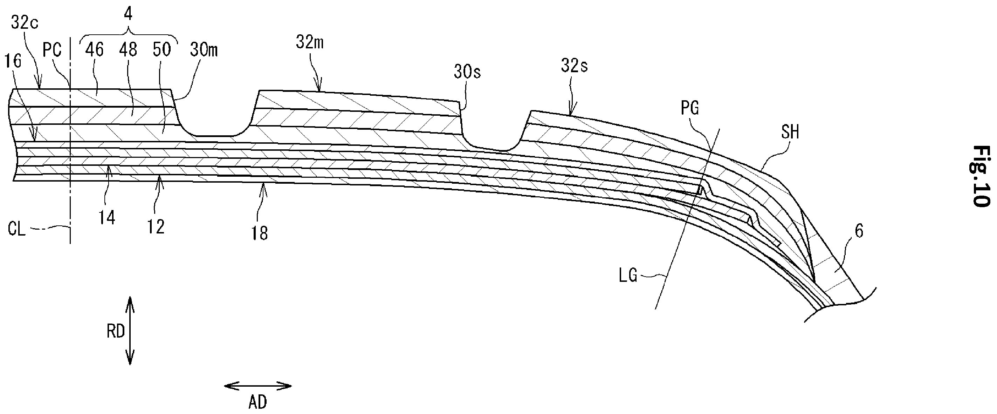

A tire of Comparative Example 1 was obtained in the same manner as Example 1, except that the configuration of the tread was changed to a configuration shown in FIG. 10 and the ratio (RMs/RMu) and the ratio (RCs/RCu) were set as shown in Table 1 below.

[Wet Grip]

New test tires were fitted onto rims (size = 16×7J) and inflated with air to adjust the internal pressures of the tires to 250 kPa. The tires were mounted to a test vehicle (passenger car). The test vehicle was driven on a test course with a wet road surface (water film thickness = 1.4 mm). The test vehicle was braked in a state where the test vehicle was running at a speed of 100 km/h, and a running distance (braking distance) from a time when the vehicle was braked to a time when the vehicle stopped was measured. The results are shown as indexes in Table 1 below with the result of Comparative Example 1 being regarded as 100. The higher the value is, the shorter the braking distance is and the better the wet performance of the tire is.

[Rolling Resistance (RRC)]

Using a rolling resistance testing machine, a rolling resistance coefficient (RRC) was measured when a test tire ran on a drum at a speed of 80 km/h under the following conditions. The results are shown as indexes in Table 1 below with the result of Comparative Example 1 being regarded as 100. The higher the value is, the lower the rolling resistance of the tire is.

Rim: 16×6.5J
Internal pressure: 210 kPa
Vertical load: 4.82 kN

[Uneven Wear Resistance]

A test tire was fitted onto a rim (size = 16×7.0J) and inflated with air to adjust the internal pressure thereof to 250 kPa. The tire was mounted to a wear energy measuring device. A camber angle was set to 0°, a slip angle was set to 0°, and the wear energy of the tire was measured. A ratio (Ec/Es) was obtained as an index of uneven wear resistance from wear energy Ec at the equator plane and wear energy Es at the ground-contact end. The results are shown as indexes in Table 1 below with the result of Comparative Example 1 being regarded as 100. The lower the value is, the better the uneven wear resistance is.

[Table 1]

| | Comparative Example 1 | Example 1 |
|---|---|---|
| Configuration | FIG. 10 | FIG. 2 |
| L/HTW [-] | 0.97 | 0.97 |
| t/HTW [-] | 0.12 | 0.12 |
| Rm/Rs [-] | 2.5 | 2.5 |
| LTcw [-] | 0.8 | 0.8 |
| LATc [-] | 130 | 130 |
| RMs/RMu [-] | 0.8 | 1.2 |
| RCs/RCu [-] | 1.0 | 0.0 |
| Wet grip | 100 | 100 |
| RRC | 100 | 103 |
| Uneven wear resistance | 100 | 100 |

As shown in Table 1, it is confirmed that in Example 1, reduction of rolling resistance is achieved without decreasing grip performance on a wet road surface. From the evaluation results, advantages of the present invention are clear.

The above-described technology capable of reducing rolling resistance without decreasing grip performance on a wet road surface can be applied to various tires.

## Claims

**1.** A tire (2) comprising:

a pair of beads (10);
a carcass (12) extending on and between the pair of beads (10);
a pair of sidewalls (6) located axially outward of the carcass (12);
a tread (4) located radially outward of the carcass (12); and
a belt (14) located between the carcass (12) and the tread (4), wherein
the tread (4) includes a plurality of layers (44) aligned in a radial direction,
the plurality of layers (44) include a cap layer (46) located on an outermost side, a base layer (50) located on an

innermost side, and an intermediate layer (48) located between the cap layer (46) and the base layer (50),
a loss tangent (LTm) at 30°C of the intermediate layer (48) is lower than a loss tangent (LTc) at 30°C of the cap layer (46),
a loss tangent (LTb) at 30°C of the base layer (50) is lower than the loss tangent (LTm) at 30°C of the intermediate layer (48),
wherein a loss tangent is measured using a viscoelasticity spectrometer according to the standards of JIS K6394, wherein the measurement conditions are: Initial strain = 10%; Dynamic strain = ±1%; Frequency = 10 Hz; Mode = stretch mode; Temperature = 30°C, wherein a test piece of 40 mm long × 4 mm wide × 1 mm thick is sampled from the tire, and the length direction of the test piece is caused to coincide with the circumferential direction of the tire, or when a test piece cannot be sampled from the tire, a test piece is sampled from a sheet-shaped crosslinked rubber obtained by pressurizing and heating a rubber composition, which is used for forming the component to be measured, at a temperature of 170°C for 12 minutes,
an outer surface (2G) of the tire (2) includes a tread surface (24) including an equator (PC) of the tire (2), and a pair of side surfaces (26) connected to the tread surface (24) and including a maximum width position (PW) of the tire (2),
in a meridian cross-section of the tire (2), a contour line of the tread surface (24) includes a plurality of arcs aligned in an axial direction,
the plurality of arcs include a center arc including the equator (PC), a pair of middle arcs connected to the center arc, a pair of shoulder arcs connected to the middle arcs, and a pair of corner arcs each located on an outermost side and connected to the shoulder arc,
a point of intersection of a first tangent line (LSH) of each corner arc at a first end, on the equator side, of the corner arc and a second tangent line (LHU) of the corner arc at a second end, on the side surface side, of the corner arc is a tread reference end (TE),
a boundary between the shoulder arc and the corner arc is a reference boundary point (SH),
a ground-contact end obtained when the tire (2) is fitted onto a standardized rim, an internal pressure of the tire (2) is adjusted to a standardized internal pressure, a load that is 80% of a standardized load is applied as a vertical load to the tire (2), and the tire (2) is brought into contact with a road surface composed of a flat surface, is a reference ground-contact end (GE),
a position, on the outer surface (2G) of the tire (2), corresponding to the reference ground-contact end (GE) is a reference ground-contact position (PG),
the reference boundary point (SH) is located axially outward of the reference ground-contact position (PG),
at least four land portions (32) including two shoulder land portions (32s) each located on the outermost side are formed in the tread (4) by at least three circumferential grooves (30) including two shoulder circumferential grooves (30s) each located on the outermost side,
each shoulder land portion (32s) includes the reference ground-contact position (PG), and
when, in the meridian cross-section of the tire (2), a normal line, of an inner surface (2N) of the tire (2), passing through the reference ground-contact position (PG) is defined as a ground-contact reference line (LG), the shoulder land portion (32s) is divided into an axially inner portion and an axially outer portion by the ground-contact reference line (LG), a ratio of a thickness of the cap layer (46) to a thickness of the tread (4) at the axially outer portion is defined as an outer thickness ratio (RCs) of the cap layer (46), a ratio of a thickness of the intermediate layer (48) to the thickness of the tread (4) at the axially outer portion is defined as an outer thickness ratio (RMs) of the intermediate layer (48), a ratio of the thickness of the cap layer (46) to the thickness of the tread (4) at the axially inner portion is defined as an inner thickness ratio (RCu) of the cap layer (46), and a ratio of the thickness of the intermediate layer (48) to the thickness of the tread (4) at the axially inner portion is defined as an inner thickness ratio (RMu) of the intermediate layer (48),

the outer thickness ratio (RCs) of the cap layer (46) is lower than the inner thickness ratio (RCu) of the cap layer (46), and
the outer thickness ratio (RMs) of the intermediate layer (48) is higher than the inner thickness ratio (RMu) of the intermediate layer (48),

**characterized in that**
a ratio (HCW/L) of a distance (HCW) in the axial direction from the equator (PC) of the tire (2) to an end (46e) of the cap layer (46) to a distance (L) in the axial direction from the equator (PC) to the reference boundary point (SH) is not less than 0.9 and not greater than 1.0.

**2.** The tire (2) according to claim 1, wherein a ratio (RMs/RMu) of the outer thickness ratio (RMs) of the intermediate layer (48) to the inner thickness ratio (RMu) of the intermediate layer (48) is not less than 1.1 and not greater than 2.0.

3. The tire (2) according to any one of claims 1 to 2, wherein

the inner thickness ratio (RCu) of the cap layer (46) is not less than 20% and not greater than 30%, and
the inner thickness ratio (RMu) of the intermediate layer (48) is not less than 40% and not greater than 50%.

4. The tire (2) according to any one of claims 1 to 3, wherein a ratio (HBW/HVW) of a distance (HBW) in the axial direction from the equator (PC) of the tire (2) to an end (50e) of the base layer (50) to a distance (HVW) in the axial direction from the equator (PC) to an end (14e) of the belt (14) is not less than 0.8 and not greater than 1.2.

5. The tire (2) according to any one of claims 1 to 4, wherein a ratio (LTm/LTc) of the loss tangent (LTm) at 30°C of the intermediate layer (48) to the loss tangent (LTc) at 30°C of the cap layer (46) is not less than 40% and not greater than 90%.

6. The tire (2) according to any one of claims 1 to 5, wherein a ratio (L/HTW) of the distance (L) in the axial direction from the equator (PC) to the reference boundary point (SH) to a distance (HTW) in the axial direction from the equator (PC) to the tread reference end (TE) is not less than 0.94 and not greater than 0.99.

7. The tire (2) according to claim 6, wherein a ratio (t/HTW) of a distance (t) in the radial direction from the equator (PC) to the reference ground-contact position (PG) to the distance (HTW) in the axial direction from the equator (PC) to the tread reference end (TE) is not less than 0.06 and not greater than 0.15.

8. The tire (2) according to claim 7, wherein a ratio (Rm/Rs) of a radius (Rm) of the middle arc to a radius (Rs) of the shoulder arc is not less than 2.1 and not greater than 2.7.

## Patentansprüche

1. Reifen (2), umfassend:

ein Paar Wülste (10);
eine Karkasse (12), die sich auf und zwischen dem Paar Wülsten (10) erstreckt;
ein Paar Seitenwände (6), die axial außen von der Karkasse (12) angeordnet sind;
einen Laufstreifen (4), der radial außen von der Karkasse (12) angeordnet ist; und
einen Gürtel (14), der zwischen der Karkasse (12) und dem Laufstreifen (4) angeordnet ist, wobei
der Laufstreifen (4) eine Vielzahl von Schichten (44) umfasst, die in einer radialen Richtung ausgerichtet sind,
die Vielzahl von Schichten (44) eine Deckschicht (46), die an einer äußersten Seite angeordnet ist, eine Basisschicht (50), die an einer innersten Seite angeordnet ist, und eine Zwischenschicht (48), die zwischen der Deckschicht (46) und der Basisschicht (50) angeordnet ist, umfasst,
ein Verlusttangens (LTm) bei 30°C der Zwischenschicht (48) niedriger als ein Verlusttangens (LTc) bei 30°C der Deckschicht (46) ist,
ein Verlusttangens (LTb) bei 30°C der Basisschicht (50) niedriger als der Verlusttangens (LTm) bei 30°C der Zwischenschicht (48) ist,
wobei ein Verlusttangens unter Verwendung eines Viskoelastizitätsspektrometers gemäß den Normen von JIS K6394 gemessen wird, wobei die Messbedingungen sind: Anfangsdehnung = 10%; dynamische Dehnung = ±1%; Frequenz = 10 Hz; Modus = Zugmodus; Temperatur = 30°C, wobei ein Prüfkörper mit einer Länge von 40 mm × einer Breite von 4 mm × einer Dicke von 1 mm aus dem Reifen entnommen wird und die Längsrichtung des Prüfkörpers mit der Reifenumfangsrichtung zur Übereinstimmung gebracht wird, oder wenn ein Prüfkörper nicht aus dem Reifen entnommen werden kann, ein Prüfkörper aus einem plattenförmigen vernetzten Kautschuk entnommen wird, der durch unter Druck Setzen und Erwärmen einer Kautschukzusammensetzung, die zum Bilden der zu messenden Komponente verwendet wird, erhalten wird, bei einer Temperatur von 170°C für 12 Minuten,
eine äußere Oberfläche (2G) des Reifens (2) eine Laufstreifenfläche (24) umfasst, die den Äquator (PC) des Reifens (2) einschließt, und ein Paar Seitenflächen (26), die mit der Laufstreifenfläche (24) verbunden sind und die Maximalbreitenposition (PW) des Reifens (2) einschließen,
in einem Meridianquerschnitt des Reifens (2) eine Konturlinie der Laufstreifenfläche (24) eine Vielzahl von Kreisbögen umfasst, die in einer axialen Richtung ausgerichtet sind,
die Vielzahl von Kreisbögen einen Zentralkreisbogen, der den Äquator (PC) einschließt, ein Paar Mittelkreisbögen, die mit dem Zentralkreisbogen verbunden sind, ein Paar Schulterkreisbögen, die mit den Mittelkreis-

bögen verbunden sind, und ein Paar Eckkreisbögen, die jeweils an einer äußersten Seite angeordnet und mit dem Schulterkreisbogen verbunden sind, umfasst,
ein Schnittpunkt einer ersten Tangentenlinie (LSH) jedes Eckkreisbogens an einem ersten Ende auf der Äquatorseite des Eckkreisbogens und einer zweiten Tangentenlinie (LHU) des Eckkreisbogens an einem zweiten Ende auf der Seite der Seitenfläche des Eckkreisbogens ein Laufstreifenbezugsende (TE) ist,
eine Grenze zwischen dem Schulterkreisbogen und dem Eckkreisbogen ein Bezugsgrenzpunkt (SH) ist,
ein Bodenkontaktende, das erhalten wird, wenn der Reifen (2) auf eine genormte Felge aufgezogen wird, ein Innendruck des Reifens (2) auf einen genormten Innendruck eingestellt wird, eine Last, die 80% einer genormten Last beträgt, als vertikale Last auf den Reifen (2) aufgebracht wird und der Reifen (2) mit einer Straßenoberfläche, die aus einer ebenen Oberfläche besteht, in Kontakt gebracht wird, ein Bezugsbodenkontaktende (GE) ist,
eine Position auf der äußeren Oberfläche (2G) des Reifens (2), die dem Bezugsbodenkontaktende (GE) entspricht, eine Bezugsbodenkontaktposition (PG) ist,
der Bezugsgrenzpunkt (SH) axial außen von der Bezugsbodenkontaktposition (PG) angeordnet ist,
mindestens vier Landabschnitte (32), die zwei Schulterlandabschnitte (32s) umfassen, die jeweils an der äußersten Seite angeordnet sind, in dem Laufstreifen (4) durch mindestens drei Umfangsrillen (30) gebildet sind, die zwei Schulterumfangsrillen (30s) umfassen, die jeweils an der äußersten Seite angeordnet sind,
jeder Schulterlandabschnitt (32s) die Bezugsbodenkontaktposition (PG) umfasst, und
wenn in dem Meridianquerschnitt des Reifens (2) eine Normale der inneren Oberfläche (2N) des Reifens (2), die durch die Bezugsbodenkontaktposition (PG) verläuft, als Bodenkontaktbezugslinie (LG) definiert ist, der Schulterlandabschnitt (32s) durch die Bodenkontaktbezugslinie (LG) in einen axial inneren Abschnitt und einen axial äußeren Abschnitt unterteilt ist, ein Verhältnis einer Dicke der Deckschicht (46) zu einer Dicke des Laufstreifens (4) an dem axial äußeren Abschnitt als ein äußeres Dickenverhältnis (RCs) der Deckschicht (46) definiert ist, ein Verhältnis einer Dicke der Zwischenschicht (48) zur Dicke des Laufstreifens (4) an dem axial äußeren Abschnitt als ein äußeres Dickenverhältnis (RMs) der Zwischenschicht (48) definiert ist, ein Verhältnis der Dicke der Deckschicht (46) zur Dicke des Laufstreifens (4) an dem axial inneren Abschnitt als ein inneres Dickenverhältnis (RCu) der Deckschicht (46) definiert ist und ein Verhältnis der Dicke der Zwischenschicht (48) zur Dicke des Laufstreifens (4) an dem axial inneren Abschnitt als inneres Dickenverhältnis (RMu) der Zwischenschicht (48) definiert ist,

das äußere Dickenverhältnis (RCs) der Deckschicht (46) niedriger als das innere Dickenverhältnis (RCu) der Deckschicht (46) ist, und
das äußere Dickenverhältnis (RMs) der Zwischenschicht (48) höher als das innere Dickenverhältnis (RMu) der Zwischenschicht (48) ist,

**dadurch gekennzeichnet, dass**
ein Verhältnis (HCW/L) einer Distanz (HCW) in der axialen Richtung vom Äquator (PC) des Reifens (2) zu einem Ende (46e) der Deckschicht (46) zu einer Distanz (L) in der axialen Richtung vom Äquator (PC) zum Bezugsgrenzpunkt (SH) nicht kleiner als 0.9 und nicht größer als 1.0 ist.

**2.** Reifen (2) nach Anspruch 1, wobei ein Verhältnis (RMs/RMu) des äußeren Dickenverhältnisses (RMs) der Zwischenschicht (48) zum inneren Dickenverhältnis (RMu) der Zwischenschicht (48) nicht kleiner als 1.1 und nicht größer als 2.0 ist.

**3.** Reifen (2) nach einem der Ansprüche 1 bis 2, wobei

das innere Dickenverhältnis (RCu) der Deckschicht (46) nicht kleiner als 20% und nicht größer als 30% ist, und
das innere Dickenverhältnis (RMu) der Zwischenschicht (48) nicht kleiner als 40% und nicht größer als 50% ist.

**4.** Reifen (2) nach einem der Ansprüche 1 bis 3, wobei ein Verhältnis (HBW/HVW) einer Distanz (HBW) in der axialen Richtung vom Äquator (PC) des Reifens (2) zu einem Ende (50e) der Basisschicht (50) zu einer Distanz (HVW) in der axialen Richtung vom Äquator (PC) zu einem Ende (14e) des Gürtels (14) nicht kleiner als 0.8 und nicht größer als 1.2 ist.

**5.** Reifen (2) nach einem der Ansprüche 1 bis 4, wobei ein Verhältnis (LTm/LTc) des Verlusttangens (LTm) bei 30°C der Zwischenschicht (48) zum Verlusttangens (LTc) bei 30°C der Deckschicht (46) nicht kleiner als 40% und nicht größer als 90% ist.

**6.** Reifen (2) nach einem der Ansprüche 1 bis 5, wobei ein Verhältnis (L/HTW) der Distanz (L) in der axialen Richtung vom

Äquator (PC) zum Bezugsgrenzpunkt (SH) zu einer Distanz (HTW) in der axialen Richtung vom Äquator (PC) zum Laufstreifenbezugsende (TE) nicht kleiner als 0.94 und nicht größer als 0.99 ist.

**7.** Reifen (2) nach Anspruch 6, wobei ein Verhältnis (t/HTW) einer Distanz (t) in der radialen Richtung vom Äquator (PC) zur Bezugsbodenkontaktposition (PG) zur Distanz (HTW) in der axialen Richtung vom Äquator (PC) zum Laufstreifenbezugsende (TE) nicht kleiner als 0.06 und nicht größer als 0.15 ist.

**8.** Reifen (2) nach Anspruch 7, wobei ein Verhältnis (Rm/Rs) eines Radius (Rm) des Mittelkreisbogens zu einem Radius (Rs) des Schulterkreisbogens nicht kleiner als 2.1 und nicht größer als 2.7 ist.

## Revendications

**1.** Pneumatique (2) comprenant :

une paire de talons (10) ;
une carcasse (12) s'étendant sur et entre la paire de talons (10) ;
une paire de parois latérales (6) situées axialement à l'extérieur de la carcasse (12) ;
une bande de roulement (4) située radialement à l'extérieur de la carcasse (12) ; et
une ceinture (14) située entre la carcasse (12) et la bande de roulement (4), dans lequel
la bande de roulement (4) inclut une pluralité de couches (44) alignées dans une direction radiale,
la pluralité de couches (44) inclut une couche de chape (46) située sur le côté le plus extérieur, une couche de base (50) située sur un côté le plus intérieur, et une couche intermédiaire (48) située entre la couche de chape (46) et la couche de base (50),
une tangente de perte (LTm) à 30 °C de la couche intermédiaire (48) est inférieure à une tangente de perte (LTc) à 30 °C de la couche de chape (46), une tangente de perte (LTb) à 30 °C de la couche de base (50) est inférieure à la tangente de perte (LTm) à 30 °C de la couche intermédiaire (48),
dans lequel une tangente de perte est mesurée à l'aide d'un spectromètre de viscoélasticité selon les standards de la norme industrielle japonaise JIS K6394, les conditions de mesurage étant les suivantes : contrainte initiale = 10 % ; contrainte dynamique = ± 1 % ; fréquence = 10 Hz ; mode = mode d'étirement ; température = 30 °C, dans lequel une éprouvette de 40 mm de longueur × 4 mm de largeur × 1 mm d'épaisseur est prélevée à partir du pneumatique, et la direction longitudinale de l'éprouvette est amenée à coïncider avec la direction circonférentielle du pneumatique, ou, quand une éprouvette ne peut pas être prélevée à partir du pneumatique, une éprouvette est prélevée à partir d'un caoutchouc réticulé en forme de feuille obtenu par pressurisation et chauffage, à une température de 170 °C pendant 12 minutes, d'une composition de caoutchouc qui est utilisée pour former le composant à mesurer,
une surface extérieure (2G) du pneumatique (2) inclut une surface de bande de roulement (24) incluant un équateur (PC) du pneumatique (2), et une paire de surfaces latérales (26) connectées à la surface de bande de roulement (24) et incluant une position de largeur maximum (PW) du pneumatique (2),
dans une section transversale méridienne du pneumatique (2), une ligne de contour de la surface de bande de roulement (24) inclut une pluralité d'arcs alignés dans une direction axiale,
la pluralité d'arcs incluent un arc central incluant l'équateur (PC), une paire d'arcs médians connectés à l'arc central, une paire d'arcs d'épaulement connectés aux arcs médians, et une paire d'arcs de coin situés chacun sur un côté le plus extérieur et connectés à l'arc d'épaulement,
un point d'intersection d'une première ligne tangente (LSH) de chaque arc de coin à une première extrémité, sur le côté d'équateur, de l'arc de coin et une deuxième ligne tangente (LHU) de l'arc de coin à une deuxième extrémité, sur le côté de surface latérale, de l'arc de coin est une extrémité de référence de bande de roulement (TE),
une limite entre l'arc d'épaulement et l'arc de coin est un point de limite de référence (SH),
une extrémité de contact au sol obtenue quand le pneumatique (2) est monté sur une jante standardisée, qu'une pression interne du pneumatique (2) est ajustée à une pression interne standardisée, qu'une charge qui est de 80 % d'une charge standardisée est appliquée comme charge verticale sur le pneumatique (2), et que le pneumatique (2) est amené en contact avec une surface routière composée d'une surface plate, est une extrémité de contact au sol de référence (GE),
une position, sur la surface extérieure (2G) du pneumatique (2), correspondant à l'extrémité de contact au sol de référence (GE) est une position de contact au sol de référence (PG),
le point de limite de référence (SH) est situé axialement à l'extérieur de la position de contact au sol de référence (PG),
au moins quatre portions en relief (32) incluant deux portions en relief d'épaulement (32s) situées chacune sur le

côté le plus extérieur sont formées dans la bande de roulement (4) par au moins trois rainures circonférentielles (30) incluant deux rainures circonférentielles d'épaulement (30s) situées chacune sur le côté le plus extérieur, chaque portion en relief d'épaulement (32s) inclut la position de contact au sol de référence (PG), et

quand, dans la section transversale méridienne du pneumatique (2), une ligne normale, d'une surface intérieure (2N) du pneumatique (2), passant par la position de contact au sol de référence (PG), est définie comme ligne de référence de contact au sol (LG), la portion en relief d'épaulement (32s) est divisée en une portion axialement intérieure et une portion axialement extérieure par la ligne de référence de contact au sol (LG), un rapport d'une épaisseur de la couche de chape (46) sur une épaisseur de la bande de roulement (4) au niveau de la portion axialement extérieure est défini comme rapport d'épaisseur extérieur (RCs) de la couche de chape (46), un rapport d'une épaisseur de la couche intermédiaire (48) sur l'épaisseur de la bande de roulement (4) au niveau de la portion axialement extérieure est défini comme rapport d'épaisseur extérieur (RMs) de la couche intermédiaire (48), un rapport de l'épaisseur de la couche de chape (46) sur l'épaisseur de la bande de roulement (4) au niveau de la portion axialement intérieure est définie comme rapport d'épaisseur intérieur (RCu) de la couche de chape (46), et un rapport de l'épaisseur de la couche intermédiaire (48) sur l'épaisseur de la bande de roulement (4) au niveau de la portion axialement intérieure est défini comme rapport d'épaisseur intérieur (RMu) de la couche intermédiaire (48),

le rapport d'épaisseur extérieur (RCs) de la couche de chape (46) est inférieur au rapport d'épaisseur intérieur (RCu) de la coupe de chape (46), et

le rapport d'épaisseur extérieur (RMs) de la couche intermédiaire (48) est supérieur au rapport d'épaisseur intérieur (RMu) de la couche intermédiaire (48),

**caractérisé en ce que**

un rapport (HCW/L) d'une distance (HCW) dans la direction axiale depuis l'équateur (PC) du pneumatique (2) jusqu'à une extrémité (46e) de la couche de chape (46) sur une distance (L) dans la direction axiale depuis l'équateur (PC) jusqu'au point de limite de référence (SH) n'est pas inférieur à 0,9 et n'est pas supérieur à 1,0.

**2.** Pneumatique (2) selon la revendication 1, dans lequel un rapport (RMs/RMu) du rapport d'épaisseur extérieur (RMs) de la couche intermédiaire (48) sur le rapport d'épaisseur intérieur (RMu) de la couche intermédiaire (48) n'est pas inférieur à 1,1 et n'est pas supérieur à 2,0.

**3.** Pneumatique (2) selon l'une quelconque des revendications 1 à 2, dans lequel

le rapport d'épaisseur intérieur (RCu) de la couche de chape (46) n'est pas inférieur à 20 % et n'est pas supérieur à 30 %, et

le rapport d'épaisseur intérieur (RMu) de la couche intermédiaire (48) n'est pas inférieur à 40 % et n'est pas supérieur à 50 %.

**4.** Pneumatique (2) selon l'une quelconque des revendications 1 à 3, dans lequel un rapport (HBW/HVW) d'une distance (HBW) dans la direction axiale depuis l'équateur (PC) du pneumatique (2) jusqu'à une extrémité (50e) de la couche de base (50) sur une distance (HVW) dans la direction axiale depuis l'équateur (PC) jusqu'à une extrémité (14e) de la ceinture (14) n'est pas inférieur à 0,8 et n'est pas supérieur à 1,2.

**5.** Pneumatique (2) selon l'une quelconque des revendications 1 à 4, dans lequel un rapport (LTm/LTc) de la tangente de perte (LTm) à 30 °C de la couche intermédiaire (48) sur la tangente de perte (LTc) à 30 °C de la couche de chape (46) n'est pas inférieur à 40 % et n'est pas supérieur à 90 %.

**6.** Pneumatique (2) selon l'une quelconque des revendications 1 à 5, dans lequel un rapport (L/HTW) de la distance (L) dans la direction axiale depuis l'équateur (PC) jusqu'au point de limite de référence (SH) sur une distance (HTW) dans la direction axiale depuis l'équateur (PC) sur l'extrémité de référence de bande de roulement (TE) n'est pas inférieur à 0,94 et n'est pas supérieur à 0,99.

**7.** Pneumatique (2) selon la revendication 6, dans lequel un rapport (t/HTW) d'une distance (t) dans la direction radiale depuis l'équateur (PC) jusqu'à la position de contact au sol de référence (PG) sur la distance (HTW) dans la direction axiale depuis l'équateur (PC) jusqu'à l'extrémité de référence de bande de roulement (TE) n'est pas inférieur à 0,06 et n'est pas supérieur à 0,15.

**8.** Pneumatique (2) selon la revendication 7, dans lequel un rapport (Rm/Rs) d'un rayon (Rm) de l'arc médian sur un rayon (Rs) de l'arc d'épaulement n'est pas inférieur à 2,1 et n'est pas supérieur à 2,7.

# Fig.1

Fig.2

50e
6
48e
TE
SH
14e
20
46e
PG
32s
30s
32m
2N
L
HCW
HVW
HBW
MC
2G
18
24
12
(38)
30m
AD
4
(46) (48) (50)
44 44 44
42
40
14
PC
32c
16
CL
(CC)
RD

# Fig.3

t
PW
26
UG
LSH
HU
TE
LHU
SH
Rk
Ru
PG
Rs
MS
HXW
HTW
L
HGW
HMS
24
Rm
CM
HCM
Rc
AD
PC
CL
RD

# Fig.4

30
30
30
30
GE
GE
32
32
32
32
32
ADe
CDe

**Fig.5**

SH
PG
PGc
SHc
24
TS
AD
RD
CL

Fig.6

30s
(32M)
32m
Pm3
TCm3
TMm3
TAm3
Pm2
TCm2
TMm2
TAm2
Pm1
TCm1
TMm1
TAm1
24
30m
2N
Lm3
Lm2
Lm1
18
12
(38)
46
48
50
4
42
40
14

**Fig.7**

TAs3
50e
4e
48e
6
TMs3
TAs2
TMs2
18
Ps3
TE
SH
Ls3
Ps2
TMs1
46e
Ps1
Ls2
TAs1
PG
Ls1
LG
Pu3
TCu3
TAu3
Lu3
TMu3
Pu2
TCu2
TAu2
Lu2
TMu2
Pu1
TCu1
TAu1
Lu1
TMu1
4
46
48
50
12
(38)
2N
16
42
40
14

Fig.8

50e
6
48e
SH
46e
PG
LG
32s
30s
32m
18
AD
30m
50
12
4
48
RD
14
46
PC
32c
16
CL

# Fig.9

6
48e
SH
46e
PG
50e
LG
32s
30s
32m
18
AD
30m
50
12
4
48
RD
14
46
PC
32c
16
CL

# Fig.10

6
SH
PG
LG
32s
30s
32m
18
AD
30m
4
50
48
46
12
14
RD
PC
32c
16
CL

**Fig.11**

Rk
SHc
Rs
TS
Rm
AD
Rc
RD
CL

# Fig.12

CS
AD
RD
CL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021120242 A
- US 2022203771 A1
- US 2022203769 A1
- EP 4019280 A1